(19) Europäisches Patentamt
European Patent Office
Office européen des brevets

(11) **EP 4 350 411 B1**

(12) **EUROPEAN PATENT SPECIFICATION**

(45) Date of publication and mention of the grant of the patent:
**09.09.2026 Bulletin 2026/37**

(21) Application number: **22845369.2**

(22) Date of filing: **20.07.2022**

(51) International Patent Classification (IPC):
***G02B 7/09*** *(2021.01)* ***H04N 23/57*** *(2023.01)*
***H04N 23/55*** *(2023.01)* ***G03B 30/00*** *(2021.01)*
***G03B 5/00*** *(2021.01)* ***G03B 3/10*** *(2021.01)*
***G02B 27/64*** *(2006.01)* ***G02B 13/00*** *(2006.01)*
***G02B 7/10*** *(2021.01)* ***G03B 13/36*** *(2021.01)*
***H04M 1/02*** *(2006.01)*

(52) Cooperative Patent Classification (CPC):
**G02B 27/646; G02B 7/102; G02B 13/001; G02B 13/0065; G03B 3/10; G03B 5/00; G03B 13/36; G03B 30/00; H04N 23/55; H04N 23/57;** H04M 1/0264

(86) International application number:
**PCT/CN2022/106877**

(87) International publication number:
**WO 2023/001204 (26.01.2023 Gazette 2023/04)**

# (54) OPTICAL LENS, PHOTOGRAPHING MODULE AND ELECTRONIC DEVICE

OPTISCHE LINSE, FOTOGRAFIEMODUL UND ELEKTRONISCHE VORRICHTUNG

LENTILLE OPTIQUE, MODULE DE PHOTOGRAPHIE ET DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.07.2021 CN 202110833303**

(43) Date of publication of application:
**10.04.2024 Bulletin 2024/15**

(73) Proprietor: **Huawei Technologies Co., Ltd.**
**Longgang**
**Shenzhen, Guangdong 518129 (CN)**

(72) Inventors:
- **HUANG, Pei**
  **Shenzhen, Guangdong 518129 (CN)**
- **LI, Dengfeng**
  **Shenzhen, Guangdong 518129 (CN)**
- **LU, Lei**
  **Shenzhen, Guangdong 518129 (CN)**

(74) Representative: **Körber, Martin Hans**
**Mitscherlich PartmbB**
**Karlstraße 7**
**80333 München (DE)**

(56) References cited:
**CN-A- 1 914 536**
**CN-A- 102 112 904**
**CN-A- 105 372 784**
**CN-A- 111 929 802**
**CN-B- 111 929 802**
**CN-U- 211 905 830**
**CN-U- 211 905 830**
**US-A1- 2007 247 539**
**US-A1- 2011 122 519**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### TECHNICAL FIELD

This application relates to the field of lens technologies, and in particular, to an optical lens, a camera module, and an electronic device.

### BACKGROUND

With the development of electronic device technologies, people expect that shooting performance of an electronic device like a mobile phone can be better. A camera module of the electronic device needs to drive a lens to move in a shooting process, to implement continuous optical zoom and a super macro mode of the camera module. Both the continuous optical zoom and the super macro mode require that the lens of the camera module to move smoothly in a large range. An existing lens has poor stability in a moving process and is prone to tilt, causing a poor shooting effect.

Patent document CN 111929802 B published on 9 March 2021 is an example of relevant prior art, disclosing an optical lens mounting comprising a carrier with two sliding bars and two respective circular openings in order to move in the axial direction, one of the circular openings of the carrier being pressed against the sliding bar by means of a magnetic attractive interaction between a magnetic conductive strip fastened to the housing and a magnetic member fastened to the carrier.

### SUMMARY

Embodiments of this application provide an optical lens, a lens module including the optical lens, and an electronic device including the lens module, to obtain an optical lens and a camera module whose lens can move smoothly, and an electronic device with a good shooting effect.

According to a first aspect, an optical lens is provided. The optical lens includes a housing, a first lens, a first carrier, a slider, a magnetic member, a magnetic conductive strip, and a first drive component. The first carrier is located on an inner side of the housing, the first lens is mounted on the first carrier, and the first drive component is configured to drive the first carrier to move along an optical axis direction of the first lens.

The first carrier is provided with a guide rail extending along the optical axis direction of the first lens, the guide rail includes a first wall surface and a second wall surface between which an included angle is formed, the slider penetrates the guide rail and both ends are fastened to the housing, and the included angle between the first wall surface and the second wall surface is within a range from 40° to 170° (including 40° and 170°).

The magnetic conductive strip is fastened to the housing, and the magnetic member is fastened to the first carrier, and is disposed opposite to the magnetic conductive strip, so that the first wall surface and the second wall surface are pressed against the slider, and the first carrier can slide relative to the slider.

It may be understood that, when the user uses the electronic device to take a photo, different shooting angles such as overlooking shooting, vertical shooting, horizontal shooting, and oblique shooting are used. Because shooting angles are different, tilt angles of the electronic device are different. For example, when the shooting angle is an overlooking shooting angle, a display of the electronic device faces upward, and the first wall surface and the second wall surface are located above the slider. When the shooting angle is vertical shooting, and the user places the electronic device in a vertical state, the display of the electronic device faces the user, and the first wall surface and the second wall surface are located on a left side of the slider.

That is, when the electronic device is at different shooting angles, location relationships between the slider and the first wall surface and between the slider and the second wall surface are different, and the slider is subject to different forces of the first wall surface and the second wall surface. Therefore, the first carrier is attached to the slider by different forces.

It may be understood that, when the electronic device is at different shooting angles, the first carrier and the slider have different degrees of conformity. As a result, when the electronic device is at a shooting angle, the first carrier is closely attached to the slider, and the first carrier moves smoothly in a moving process. However, when the electronic device is at another shooting angle, the first carrier is not closely attached to the slider, and the first carrier tilts relative to the slider in a moving process.

However, in a conventional technology, in a photographing process of the electronic device at a plurality of shooting angles, the first carrier can move stably relative to the slider only at a shooting angle, and a deviation occurs when the first carrier cannot move relative to the slider at another shooting angle.

In view of this, the guide rail provided in this application includes the first wall surface and the second wall surface between which the included angle is formed, the slider is in contact with the first wall surface and the second wall surface, and an included angle $\theta$ between the first wall surface and the second wall surface is within a range from 40° to 170°

(including 40° and 170°). In this application, a value of the included angle θ is limited within the range from 40° to 170° (including 40° and 170°), so that the first carrier can be closely attached to the slider regardless of whether the electronic device is at an overlooking shooting angle, a vertical shooting angle, or another shooting angle. When the first carrier moves relative to the slider, it is ensured that the first carrier does not deviate and moves smoothly. This ensures an imaging quality and effect of the electronic device, and improves user experience.

In a possible implementation, the included angle between the first wall surface and the second wall surface is within a range from 70° to 120° (including 70° and 120°). For example, the included angle θ may be an angle like 70°, 74°, 80°, 88°, 95°, 100°, or 120°, to ensure a thrust of the first drive component on the first carrier, and further ensure that the first carrier does not tilt or deviate in a moving process regardless of a shooting angle of the electronic device. Certainly, in another implementation, the angles between the first wall surface and the second wall surface may be further determined based on the thrust of the first drive component on the first carrier and a magnetic attraction force between the magnetic conductive strip and the magnetic member.

In a possible implementation, the first wall surface and the second wall surface are located above the slider. Alternatively, the first wall surface and the second wall surface are located below the slider. Alternatively, the first wall surface and the second wall surface are located on a left side of the slider. Alternatively, the first wall surface and the second wall surface are located on a right side of the slider.

In a possible implementation, the optical lens further includes a sensing magnet and a Hall effect sensor, the sensing magnet is fastened to the first carrier and is disposed adjacent to the magnetic member, and the Hall effect sensor is disposed opposite to the sensing magnet.

The Hall effect sensor in this implementation is configured to detect a magnetic field intensity when the sensing magnet is located at different locations. A magnetic field intensity at a location at which the sensing magnet is located is measured, and whether the magnetic field intensity is equal to a preset magnetic field intensity at a target location is determined by using the Hall effect sensor. When the magnetic field intensity is not equal to the preset magnetic field intensity at the target location, the first drive component can continue to push the first carrier to move, so that the first carrier accurately moves to the target location. Therefore, by disposing the Hall effect sensor and the sensing magnet, accuracy of driving the first lens by the first carrier to move can be significantly improved.

In a possible implementation, the optical lens further includes a shielding member. The shielding member is configured to restrict a magnetic field direction of the sensing magnet, or the shielding member is configured to restrict a magnetic field direction of the magnetic member, to avoid magnetic interference between the sensing magnet and the magnetic member, and prevent the magnetic interference from affecting detection precision of the Hall effect sensor.

In a possible implementation, the optical lens further includes a shielding member, the shielding member includes a first shielding member and a second shielding member, the first shielding member is configured to restrict a magnetic field direction of the sensing magnet, and the second shielding member is configured to restrict a magnetic field direction of the magnetic member, to avoid magnetic interference between the sensing magnet and the magnetic member, and prevent the magnetic interference from affecting detection precision of the Hall effect sensor.

In a possible implementation, the sensing magnet includes a bottom surface, a first side surface, a top surface, and a second side surface that are sequentially connected, the bottom surface faces the Hall effect sensor, and the first shielding member wraps the first side surface, the top surface, and the second side surface of the sensing magnet. The magnetic member includes a first surface, a second surface, a third surface, and a fourth surface that are sequentially connected, the first surface faces a corresponding magnetic conductive strip, and the second shielding member wraps the second surface, the third surface, and the fourth surface of the magnetic member. In this implementation, the first shielding member and the second shielding member separately wrap the sensing magnet and the magnetic member in three surfaces, to avoid mutual magnetic interference between the sensing magnet and the magnetic member.

It may be understood that a magnetic field of the sensing magnet is distributed in a radial manner, and only a partial magnetic field intensity of the sensing magnet can be used. If the magnetic field intensity is increased, a magnetic interference problem is more prominent. In this implementation, the first shielding member wraps the sensing magnet, to enhance a magnetic field intensity in a directional manner, and a magnetic line of the sensing magnet is constrained around the sensing magnet, so that the magnetic field of the sensing magnet is more inclined to the Hall effect sensor. This improves sensing precision of the Hall effect sensor, and reduces interference caused by the sensing magnet to another magnet.

Similarly, the magnetic field of the magnetic member is also distributed in a radial manner. The second shielding member wraps the magnetic member, so that a magnetic field intensity of the magnetic member can also be increased in a directional manner. A magnetic line of the magnetic member is constrained around the magnetic member, so that a magnetic attraction force between the magnetic member and the magnetic conductive strip is stronger. Therefore, the magnetic member can be made smaller, and spacing between the magnetic member and the sensing magnet may also be smaller. At the same time, this can reduce the magnetic interference of the magnetic member to the sensing magnet.

In addition, the sensing magnet and the magnetic member are separately wrapped by corresponding shielding members. This further helps reduce interference caused by the sensing magnet and the magnetic member to a peripheral

device.

Certainly, in another implementation, the first shielding member may further wrap the sensing magnet on one to six surfaces other than three surfaces. The second shielding member may further wrap the magnetic member on one to six surfaces other than three surfaces.

In a possible implementation, a friction coefficient of the slider is less than 0.15. This effectively reduces resistance between the first carrier and the slider.

In a possible implementation, the first drive component includes a first coil and a first drive magnet, the first drive magnet is fastened to the first carrier, and the first coil and the first drive magnet are disposed opposite to each other. The first coil and the first drive magnet cooperate to drive the first carrier to move.

In a possible implementation, the first drive component further includes a magnetic shielding member, the magnetic shielding member includes a first side panel and a second side panel that are disposed opposite to each other, a side that is of the first side panel and that faces away from the second side panel is fastened to the first carrier, the second side panel penetrates the first coil, and the first drive magnet is disposed on a side that is of the first side panel and that faces the second side panel. The first drive magnet shields interference to the sensing magnet and the magnetic member by using the first side panel. In addition, a magnetic field of the first drive magnet is distributed in a radial manner. A magnetic line of the first drive magnet is constrained by using the first side panel and the second side panel, so that the magnetic line of the first drive magnet is constrained around the first drive magnet, so that a magnetic field intensity is more converged, and a magnetic field intensity of the first drive magnet is enhanced.

In addition, the second side panel passes through the center of the first coil, and introduces a magnetic field of the first drive magnet into the first coil, to further enhance a magnetic field of the first coil, and increase a driving force of the first drive component. With a same driving force, the first drive magnet in this implementation may be smaller. This helps implement a long stroke (a micrometer-level to a centimeter-level stroke) and miniaturization of the optical lens, and save space of the electronic device.

In a possible implementation, a groove is disposed on a surface that is of the first side panel and that faces away from the first carrier, and the first drive magnet is disposed in the groove. Specifically, when the first drive magnet is disposed in the groove, the groove is exposed only on a surface that is of the first drive magnet and that faces the second side panel. That is, five surfaces of the first drive magnet are all wrapped by the groove, and the other surface faces the second side panel. That is, six surfaces of the first drive magnet are wrapped by magnetic shielding members. A magnetic field of the first drive magnet is constrained inside the groove, and a magnetic field of the first coil is enhanced. This effectively enhances a driving force of the first drive component, and implements large-stroke (7 mm) movement of the first lens in limited space.

In a possible implementation, the first carrier includes a first drive side and a first driven side that are disposed opposite to each other, the slider includes a first slider and a second slider, the first slider penetrates the first drive side, the second slider penetrates the first driven side, and a pole length of the first drive side is greater than a pole length of the first driven side. The pole length of the first drive side is a length of contact between the first drive side and the first slider. The pole length of the first driven side is a length of contact between the first driven side and the second slider.

It may be understood that the first drive component drives the first drive side, so that the first drive side drives the first carrier and a component disposed on the first carrier to move. In other words, a driving force of the first drive component is applied to the first drive side. The pole length of the first drive side is set to be greater than the pole length of the first driven side, so that the first drive side is more easily to be subject to a force, so that the first carrier is more stable and smooth in a sliding process.

In a possible implementation, there are a plurality of magnetic members, some of the magnetic members are disposed on the first drive side, and some of the magnetic members are disposed on the first driven side; and there are two magnetic conductive strips, and the two magnetic conductive strips are disposed at an interval on a bottom wall of the housing, and are respectively disposed opposite to the first drive side and the first driven side. The magnetic members are disposed on the first drive side and the first driven side. This can better ensure that the first wall surface and the second wall surface are closely attached to the first slider and the second slider.

In a possible implementation, a quantity of magnetic members disposed on the first drive side is greater than a quantity of magnetic members disposed on the first driven side. Because the pole length of the first drive side is greater than the pole length of the first driven side, and the quantity of magnetic members disposed on the first drive side is greater than the quantity of magnetic members disposed on the first driven side, the first carrier is more stably attached to the first slider and the second slider.

In a possible implementation, there are three magnetic members, two magnetic members are disposed on the first drive side at an interval along an extension direction of the guide rail, and a magnetic conductive strip corresponding to the first drive side generates a magnetic attraction force. One magnetic member is disposed in the middle of the first driven side, and a magnetic conductive strip corresponding to the first driven side generates a magnetic attraction force. In this implementation, there are three magnetic members, that is, the first carrier is subject to three magnetic attraction forces, to ensure that the first carrier is subject to a balanced force.

In a possible implementation, centers of magnetic attraction forces of the three magnetic members and the corresponding magnetic conductive strips coincide with the first carrier and the center of mass of the first lens fastened to the first carrier, so that the first carrier is more stably attached to the first slider and the second slider.

In a possible implementation, the three magnetic members are all embedded in the corresponding first drive side and the corresponding first driven side, to facilitate thinning of the optical lens and reduce occupied space of the electronic device.

In a possible implementation, the sensing magnet is embedded in the first drive side, to facilitate thinning of the optical lens and reduce occupied space of the electronic device.

In a possible implementation, the optical lens further includes a second lens, a second carrier, and a second drive component, the second carrier is located on an inner side of the housing, the second lens is mounted on the second carrier, and the second drive component is configured to drive the second carrier to move along the optical axis direction; and the second carrier includes a second drive side and a second driven side, the first slider penetrates the second driven side, the second slider penetrates the second drive side, and a pole length of the second drive side is greater than a pole length of the second driven side. It may be understood that the second drive component drives the second drive side, so that the second drive side drives the second carrier and a component disposed on the second carrier to move. In other words, a driving force of the second drive component is applied to the second drive side. The pole length of the second drive side is set to be greater than the pole length of the second driven side, so that the second drive side is more easily to be subject to a force, so that the second carrier is more stable and smooth in a sliding process.

In a possible implementation, the first drive side and the second driven side are located on a same side, and the first driven side and the second drive side are located on a same side. In other words, a side with a narrow width of the first carrier and a side with a wide width of the second carrier are located on a same side, and a side with a wide width of the first carrier and a side with a narrow width of the second carrier are located on a same side. Therefore, sizes of the first carrier and the second carrier in the optical axis direction are smaller. This facilitates miniaturization of the optical lens. In addition, a distance between the first carrier and the second carrier may be adjusted closer than that obtained when the first drive side and the second drive side are located on the same side. This facilitates a zoom requirement of the optical lens.

In a possible implementation, a length of the magnetic conductive strip is greater than or equal to a maximum travel range of the first carrier and the second carrier. It may be understood that a location that the first carrier can move to the farthest in a direction away from the second carrier is a first location, a location that the second carrier can move to the farthest in a direction away from the first carrier is the second location, and a maximum travel range of the first carrier and the second carrier is a distance between the first location and the second location. A length of the magnetic conductive strip is limited to be greater than or equal to the maximum travel range of the first carrier and the second carrier, to ensure that the first carrier and the second carrier can be closely attached to the first slider and the second slider when moving to any location.

According to a second aspect, a camera module is provided. The camera module includes a module circuit board, a photosensitive chip, and an optical lens. The module circuit board is located on an image side of the optical lens, the photosensitive chip is fastened to a side that is of the module circuit board and that faces the optical lens, and the photosensitive chip is configured to collect light passing through the optical lens. The optical lens includes a housing, a first lens, a first carrier, a slider, a magnetic member, a magnetic conductive strip, and a first drive component. The first carrier is located on an inner side of the housing, the first lens is mounted on the first carrier, and the first drive component is configured to drive the first carrier to move along an optical axis direction of the first lens.

The first carrier is provided with a guide rail extending along the optical axis direction of the first lens, the guide rail includes a first wall surface and a second wall surface between which an included angle is formed, the slider penetrates the guide rail and both ends are fastened to the housing, and the included angle between the first wall surface and the second wall surface is within a range from 40° to 170° (including 40° and 170°).

The magnetic conductive strip is fastened to the housing, and the magnetic member is fastened to the first carrier, and is disposed opposite to the magnetic conductive strip, so that the first wall surface and the second wall surface are pressed against the slider, and the first carrier can slide relative to the slider. The camera module with the foregoing optical lens has a good photographing effect.

In a possible implementation, the included angle between the first wall surface and the second wall surface is within a range from 70° to 120° (including 70° and 120°).

In a possible implementation, the optical lens further includes a sensing magnet and a Hall effect sensor, the sensing magnet is fastened to the first carrier and is disposed adjacent to the magnetic member, and the Hall effect sensor is disposed opposite to the sensing magnet.

In a possible implementation, the optical lens further includes a shielding member, the shielding member includes a first shielding member and a second shielding member, the first shielding member is configured to restrict a magnetic field direction of the sensing magnet, and the second shielding member is configured to restrict a magnetic field direction of the magnetic member.

In a possible implementation, a friction coefficient of the slider is less than 0.15.

In a possible implementation, the first drive component includes a first coil and a first drive magnet, the first drive magnet is fastened to the first carrier, and the first coil and the first drive magnet are disposed opposite to each other.

In a possible implementation, the first drive component further includes a magnetic shielding member, the magnetic shielding member includes a first side panel and a second side panel that are disposed opposite to each other, a side that is of the first side panel and that faces away from the second side panel is fastened to the first carrier, the second side panel penetrates the first coil, and the first drive magnet is disposed on a side that is of the first side panel and that faces the second side panel.

In a possible implementation, a groove is disposed on a surface that is of the first side panel and that faces away from the first carrier, and the first drive magnet is disposed in the groove.

In a possible implementation, the first carrier includes a first drive side and a first driven side that are disposed opposite to each other, the slider includes a first slider and a second slider, the first slider penetrates the first drive side, the second slider penetrates the first driven side, and a pole length of the first drive side is greater than a pole length of the first driven side.

In a possible implementation, there are a plurality of magnetic members, some of the magnetic members are disposed on the first drive side, and some of the magnetic members are disposed on the first driven side; and there are two magnetic conductive strips, and the two magnetic conductive strips are disposed at an interval on a bottom wall of the housing, and are respectively disposed opposite to the first drive side and the first driven side.

In a possible implementation, a quantity of magnetic members disposed on the first drive side is greater than a quantity of magnetic members disposed on the first driven side.

In a possible implementation, the optical lens further includes a second lens, a second carrier, and a second drive component, the second carrier is located on an inner side of the housing, the second lens is mounted on the second carrier, and the second drive component is configured to drive the second carrier to move along the optical axis direction; and the second carrier includes a second drive side and a second driven side, the first slider penetrates the second driven side, the second slider penetrates the second drive side, and a pole length of the second drive side is greater than a pole length of the second driven side.

According to a third aspect, an electronic device is provided. The electronic device includes a housing and the foregoing camera module, and the camera module is mounted on the housing. The electronic device having the foregoing camera module has a good photographing effect.

## BRIEF DESCRIPTION OF DRAWINGS

To describe the technical solutions in embodiments of this application or in the background more clearly, the following describes the accompanying drawings for describing embodiments of this application or the background.

FIG. 1 is a schematic diagram of a structure of an electronic device according to an embodiment of this application;

FIG. 2 is a schematic diagram of a structure of the electronic device shown in FIG. 1 from another angle;

FIG. 3 is a partial schematic sectional view of the electronic device shown in FIG. 1 in an A-A direction;

FIG. 4 is a schematic diagram of a structure of an optical lens shown in FIG. 3;

FIG. 5 is a schematic diagram of an exploded structure of the optical lens shown in FIG. 4;

FIG. 6 is a schematic diagram of a partial structure of the structure shown in FIG. 5;

FIG. 7 is a schematic diagram of an exploded structure of a partial structure of the structure shown in FIG. 5;

FIG. 8 is a schematic diagram of an exploded structure of a partial structure of the structure shown in FIG. 7;

FIG. 9 is a schematic diagram of a structure of a partial structure of the structure shown in FIG. 8 from another angle;

FIG. 10 is a schematic diagram of a cross-sectional structure of a partial structure of the structure shown in FIG. 5 in a B-B direction;

FIG. 11 is a schematic diagram of a partial structure of the structure shown in FIG. 7;

FIG. 12 is a schematic diagram of a partially enlarged structure of the structure shown in FIG. 10;

FIG. 13 is a schematic diagram of locations of a guide rail and a first slider during overlooking shooting;

FIG. 14 is a schematic diagram of locations of a guide rail and a first slider during vertical shooting;

FIG. 15 is a schematic diagram of a first wall surface, a second wall surface, and a first slider when the electronic device shown in FIG. 1 performs overlook shooting;

FIG. 16 is a schematic diagram of a first wall surface, a second wall surface, and a first slider when the electronic device shown in FIG. 1 performs vertical shooting;

FIG. 17 is a force analysis diagram of a first carrier rotating at any angle;

FIG. 18 is a curve diagram of N1 and N2 changing with $\alpha$;

FIG. 19 is a curve diagram of N1 and N2 changing with $\theta$;

FIG. 20 is a schematic diagram of a cross-sectional structure of a partial structure of the structure shown in FIG. 5 in a C-C direction;

FIG. 21 is a partially enlarged schematic diagram of the structure shown in FIG. 10;

FIG. 22 is a magnetic field simulation diagram obtained when a shielding member is disposed on a single surface of a sensing magnet;

FIG. 23 is a magnetic field simulation diagram obtained when a shielding member is disposed on three surfaces of a sensing magnet;

FIG. 24 is a schematic diagram of a cross-sectional structure of the structure shown in FIG. 11 in a D-D direction; and

FIG. 25 is a schematic diagram of a first drive magnet shown in FIG. 24.

## DESCRIPTION OF EMBODIMENTS

The following describes embodiments of this application with reference to the accompanying drawings in embodiments of this application.

In descriptions of embodiments of this application, it should be noted that, unless otherwise specified and limited, terms "mounting" and "connection" should be understood in a broad sense. For example, "connection" may be a detachable connection, or may be a nondetachable connection, or may be a direct connection, or may be an indirect connection using an intermediate medium. The "fastening" means that both ends are connected to each other and a relative location relationship remains unchanged after the connection. "Sliding connection" means that both ends are connected and can slide relative to each other after being connected. Orientation terms mentioned in embodiments of this application, for example, "up", "down", "left", "inside", and "outside", are only directions of reference to accompanying drawings. Therefore, the orientation terms are used to better and more clearly describe and understand embodiments of this application, and are not intended to indicate or imply that an apparatus or element needs to have a specific orientation and be constructed and operated in a specific orientation. Therefore, the orientation terms cannot be understood as a limitation on embodiments of this application. "A plurality of" means at least two.

It may be understood that specific embodiments described herein are merely used to explain a related invention, but are not intended to limit the present invention. In addition, it should be further noted that, for ease of description, only parts related to the present invention are shown in the accompanying drawings.

It should be noted that embodiments in this application and the features in embodiments may be mutually combined in the case of no conflict. This application is described in detail in the following with reference to the accompanying drawings by using embodiments.

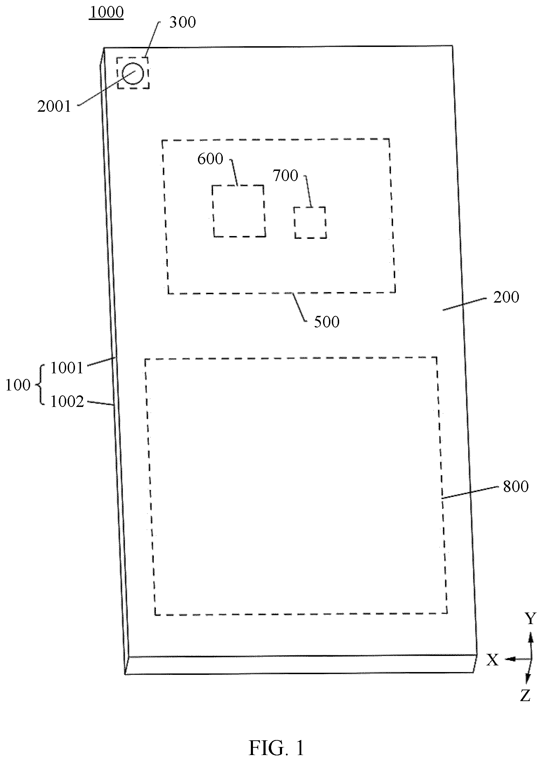

Refer to FIG. 1. FIG. 1 is a schematic diagram of a structure of an electronic device 1000 according to an embodiment of this application. The electronic device 1000 may be a device of another form that has a photographing function and a video recording function, such as a mobile phone, a tablet computer, a notebook computer, a camera, a vehicle-mounted device, a wearable device, a folding terminal device, or a television. The wearable device may be a smart band, a smart watch, a smart head-mounted display, smart glasses, or the like. In the embodiment shown in FIG. 1, descriptions are provided by using an example in which the electronic device 1000 is a mobile phone.

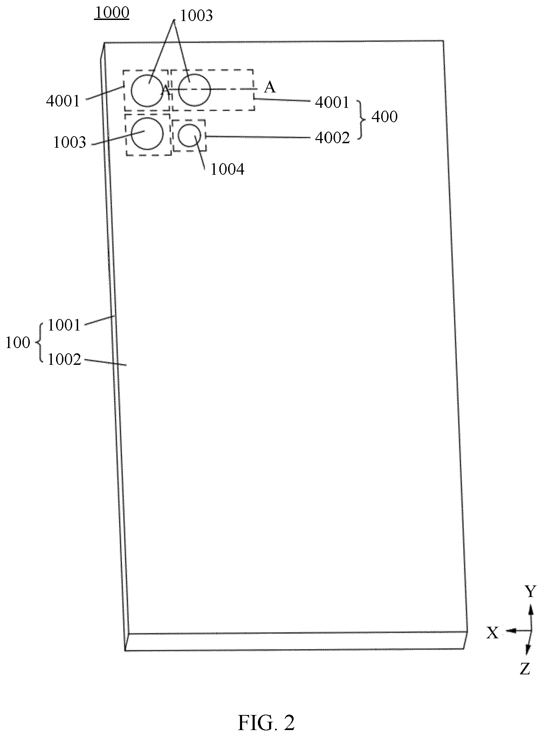

Refer to FIG. 1 and FIG. 2. FIG. 2 is a schematic diagram of a structure of the electronic device 1000 shown in FIG. 1 from another angle.

For ease of description, a width direction of the electronic device 1000 is defined as an X axis. A length direction of the electronic device 1000 is a Y axis. A thickness direction of the electronic device 1000 is a Z axis. It may be understood that a coordinate system of the electronic device 1000 may be flexibly set based on a specific actual requirement.

The electronic device 1000 may include one or more of a housing 100, a display 200, a front-facing camera assembly 300, a rear-facing camera assembly 400, a mainboard 500, a processor 600, a memory 700, and a battery 800. For example, in another embodiment, when the electronic device 1000 is a foldable terminal device, the electronic device 1000 may not have a front-facing camera assembly, and the rear-facing camera assembly 400 of the electronic device 1000 may be applied to a selfie scenario.

The display 200 is configured to display an image, a video, and the display 200 may be further integrated with a touch function. The display 200 may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like.

The display 200 is mounted on the housing 100. The housing 100 may include a bezel 1001 and a rear cover 1002. The display 200 and the rear cover 1002 are respectively mounted on two sides opposite to each other of the bezel 1001. In this embodiment, in an external space of the electronic device 1000, space facing the display 200 is defined as the front of the electronic device 1000, and space facing the rear cover 1002 is defined as the rear of the electronic device 1000.

In some embodiments, the front-facing camera assembly 300 is located on an inner side of the housing 100 and is located below the display 200. The display 200 is provided with a light transmission part 2001, and the front-facing camera assembly 300 collects light from the front of the electronic device 1000 through the light transmission part 2001, to implement shooting. The front-facing camera assembly 300 may include a camera module described in the following embodiments, or may include a camera module of another structure.

The rear cover 1002 is provided with at least one camera hole 1003. The rear-facing camera assembly 400 is located on an inner side of the housing 100. The rear-facing camera assembly 400 collects light from the rear of the electronic device 1000 through the at least one camera hole 1003, to implement shooting. The rear-facing camera assembly 400 includes at least one camera module 4001, for example, may include one or more of a standard camera module, a long-focus camera module, a wide-angle camera module, an ultra-long-focus camera module, or an ultra-wide-angle camera module. For example, the rear-facing camera assembly 400 includes a standard camera, a wide-angle camera, and a periscope long-focus camera. The camera module 4001 of the rear-facing camera assembly 400 may include a camera module described in the following embodiments, or may include a camera module of another structure.

The rear-facing camera assembly 400 may further include a flash module 4002. The rear cover 1002 is provided with a flash hole 1004. The flash module 4002 is located on an inner side of the housing 100, and emits light through the flash hole 1004.

The mainboard 500 is located on an inner side of the housing 100, and a processor 600, a memory 700, and other various circuit components are integrated on the mainboard 500. The display 200, the front-facing camera assembly 300, and the rear-facing camera assembly 400 are coupled to the processor 600. The processor 600 may include one or more processing units. For example, the processor 600 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors 600.

The processor 600 may generate an operation control signal based on instruction operation code and a time sequence signal, to complete control of instruction reading and instruction execution.

An internal memory may be further disposed in the processor 600, and is configured to store instructions and data. In some embodiments, the memory in the processor 600 may be a cache memory. The memory may store instructions or data that has been used or frequently used by the processor 600. If the processor 600 needs to use the instructions or the data, the processor 600 may directly invoke the instructions or the data from the memory. This avoids repeated access and reduces a waiting time of the processor 600, and therefore improves system efficiency.

In some embodiments, the processor 600 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor 600 may be connected to a related function module through at least one of the foregoing interfaces.

The memory 700 may be configured to store computer-executable program code of a computer. The executable program code includes instructions. The memory 700 may include a program storage area and a data storage area. The program storage area may store an operating system, an application required by at least one function (for example, a photographing function or a video recording function), and the like. The data storage area may store data (such as image data and video data) created during use of the electronic device 1000, and the like. In addition, the memory 700 may include a high-speed random access memory, and may further include a nonvolatile memory such as at least one disk storage device, a flash memory, or a universal flash storage (universal flash storage, UFS) 700. The processor 600 executes various function methods or data processing of the electronic device 1000 by running the instructions stored in the memory 700 and/or the instructions stored in the memory 700 disposed in the processor 600, for example, enables the display 200 to display a target image, and enables the front-facing camera assembly 300 and the rear-facing camera assembly 400 to take a target image. The battery 800 is configured to supply power to the electronic device 1000.

The electronic device 1000 may further include one or more of function modules such as an antenna module, a mobile communication module, a sensor module, a motor, a microphone module, or a speaker module. The function module is coupled to the processor 600. The antenna module is configured to transmit and receive an electromagnetic wave signal. The antenna module may include a plurality of antennas, and each antenna may be configured to cover one or more communication frequency bands. Different antennas may be further reused, to improve antenna utilization. The mobile communication module may provide a solution applied to the electronic device 1000 for wireless communication such as 2G/3G/4G/5G. The sensor module may include one or more of a pressure sensor, a gyroscope sensor, a barometric pressure sensor, a magnetic sensor, an acceleration sensor, a distance sensor, an optical proximity sensor, a fingerprint sensor, a temperature sensor, a touch sensor, or an ambient light sensor. The motor may generate a vibration prompt. The motor may be used for an incoming call vibration prompt, or may be used for a touch vibration feedback. The microphone module may be configured to convert a sound signal into an electrical signal. The speaker module is configured to convert an electrical signal into a sound signal.

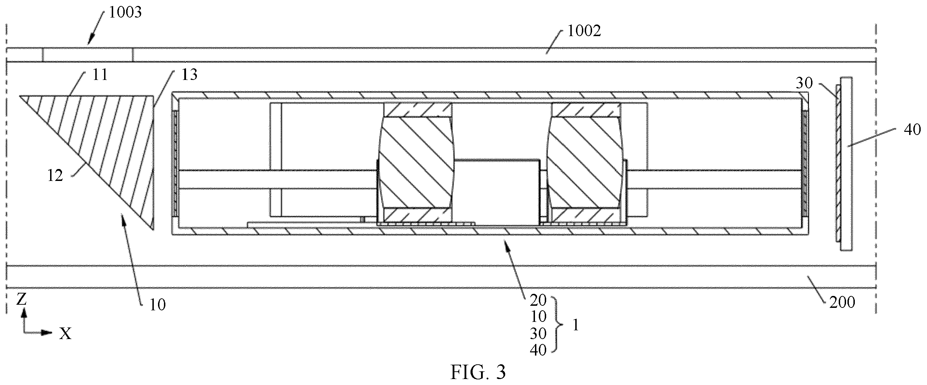

Refer to FIG. 1 and FIG. 3. FIG. 3 is a partial schematic sectional view of the electronic device 1000 shown in FIG. 1 in an A-A direction.

A camera module 1 is fastened inside the electronic device 1000. Specifically, the camera module 1 is fastened to a side that is of the display 200 and that faces the rear cover 1002. In another embodiment, when the housing 100 includes a middle plate, the camera module 1 may be fastened to a surface that is of the middle plate and that faces the rear cover 1002. In this embodiment, the camera module 1 is a periscope camera module 1. Certainly, in another embodiment, the camera module 1 may alternatively be a vertical camera module 1.

In this embodiment, the camera module 1 is electrically connected to the mainboard 500. Specifically, the camera module 1 is electrically connected to the processor 600 through the mainboard 500. When the processor 600 receives an instruction of a user, the processor 600 can send a signal to the camera module 1 through the mainboard 500, to control the camera module 1 to take an image or record a video. In another embodiment, the camera module 1 may also directly receive an instruction of the user, and perform image taking or video recording according to the instruction of the user.

Refer to FIG. 3. The camera module 1 includes a light rotating member 10, an optical lens 20, a photosensitive chip 30, and a module circuit board 40.

The light rotating member 10 is fastened to a light input side of the optical lens 20, and the light rotating member 10 is configured to reflect light, so that light is transmitted to the optical lens 20. In this embodiment, the light rotating member 10 may be configured to reflect light propagated along a Z-axis direction to light propagated along an X-axis direction. Light from an environment enters the light rotating member 10 through the camera hole 1003, and is reflected to the optical lens 20 through the light rotating member 10. In another embodiment, the light rotating member 10 may be configured to reflect light propagated along the Z-axis direction to light propagated along another direction.

For example, the light rotating member 10 is a prism. Certainly, the light rotating member 10 may alternatively be a reflecting mirror. The light rotating member 10 includes a light inlet surface 11, a reflection surface 12, and a light outlet surface 13. The reflection surface 12 is connected between the light inlet surface 11 and the light outlet surface 13. The light inlet surface 11 is disposed opposite to the camera hole 1003. The light outlet surface 13 is disposed opposite to the optical lens 20. In this case, after light enters through the camera hole 1003, the light enters the light rotating member 10 through the light inlet surface 11, and is reflected on the reflection surface 12 of the light rotating member 10. In this case, light that propagates along the Z-axis direction is reflected to the X-axis direction. Finally, the light passes through the light outlet surface 13 of the light rotating member 10 and then passes out of the light rotating member 10, and enters the optical lens 20.

It may be understood that, the light that propagates along the Z-axis direction is reflected by the light rotating member 10 to the light that propagates along the X-axis direction. In this way, components of the camera module 1 that receive light transmitted along the X-axis direction may be arranged along the X-axis direction. Because a size of the electronic device 1000 in the X-axis direction is large, components in the camera module 1 are arranged more flexibly and simpler in the X-axis direction. In this embodiment, an optical axis direction of the camera module 1 is the X-axis direction. In another embodiment, an optical axis direction of the camera module 1 may alternatively be the Y-axis direction.

In this embodiment, the light rotating member 10 may be disposed on a motor (not shown in the figure), and a location of the light rotating member 10 in the Z-axis direction or the X-axis direction is adjusted, or a gradient of the light rotating member 10 relative to a plane on which the X axis and the Y axis are located is adjusted by using the motor. The light rotating member 10 can rotate on an XZ plane with the Y axis as a rotation axis. In addition, the light rotating member 10 can also rotate on an XY plane with the Z axis as a rotation axis. It may be understood that the camera module 1 is prone to jitter in a process of collecting light. In this case, a transmission path of the light is prone to refraction, and consequently, an image taken by the camera module 1 is not good. In this embodiment, when the transmission path of the light is refracted, the motor can drive the light rotating member 10 to rotate, to adjust the transmission path of the light by using the light rotating member 10, to implement focusing, reduce or avoid refraction of the transmission path of the light, and ensure that the camera module 1 has a good photographing effect. Therefore, the light rotating member 10 can achieve an optical image stabilization effect.

The module circuit board 40 is fastened on a light outlet side of the optical lens 20, that is, the module circuit board 40 is located on an image side of the optical lens 20. The module circuit board 40 may be electrically connected to the mainboard 500. In this way, a signal can be transmitted between the mainboard 500 and the module circuit board 40.

The photosensitive chip 30 is fastened on a side that is of the module circuit board 40 and that faces the optical lens 20, and the photosensitive chip 30 is electrically connected to the module circuit board 40. In this way, after the photosensitive chip 30 collects the light passing through the optical lens 20, the photosensitive chip 30 generates a signal based on the light, and transmits the signal to the mainboard 500 through the module circuit board 40.

In an implementation, the photosensitive chip 30 may be surface-mounted on the module circuit board 40 by using a chip on board (chip on board, COB) technology. In another implementation, the photosensitive chip 30 may be packaged on the module circuit board 40 by using a ball grid array (ball grid array, BGA) technology or a land grid array (land grid array, LGA) technology.

In another implementation, an electronic component or a chip (for example, a drive chip) may be further mounted on the module circuit board 40. The electronic component or another chip is disposed around the photosensitive chip 30. The electronic component or another chip is configured to assist the photosensitive chip 30 in collecting light, and assist the photosensitive chip 30 in performing signal processing on the collected light.

In another implementation, the module circuit board 40 may also be partially disposed with a sunken groove. In this case, the photosensitive chip 30 may be mounted in the sunken groove. In this way, there is an overlapping area between the photosensitive chip 30 and the module circuit board 40 in the X-axis direction. In this case, the camera module 1 may be disposed to be thin in the X-axis direction.

In some embodiments, the camera module 1 further includes a light filter (not shown in the figure), and the light filter is located on a side that is of the photosensitive chip 30 and that faces the optical lens 20. The light filter may be configured to: filter out stray light of light passing through the optical lens 20, and propagate filtered light to the photosensitive chip 30, to ensure that an image taken by the electronic device 1000 has good definition. The filter may be but is not limited to a blue glass filter. For example, the filter may be a reflective infrared filter or a dual-passband filter (the dual-passband filter may allow visible light and infrared light in light to simultaneously pass through, allow visible light and light of another specified wavelength (for example, ultraviolet light) in light to simultaneously pass through, or allow infrared light and light of another specified wavelength (for example, ultraviolet light) to simultaneously pass through).

Certainly, in another embodiment, the camera module 1 may further include a reflector. The reflector is disposed on the light outlet side of the optical lens 20, and the photosensitive chip 30 is disposed below the reflector. It may be understood that the reflector and the photosensitive chip 30 are disposed at an interval in the Z-axis direction. In this embodiment, the reflector is a prism, an incident surface of the reflector faces the optical lens 20, and an emergent surface of the reflector faces the photosensitive chip 30. Light from the optical lens 20 is reflected to the photosensitive chip 30 by using the reflector. In other words, the reflector reflects light propagated along the X-axis direction to light propagated along the Z-axis direction. Certainly, in another embodiment, the reflector may also be a reflecting mirror.

It may be understood that, in this embodiment, by disposing the reflector, a photosensitive plane of the photosensitive chip 30 may be perpendicular to the Z-axis. A size in the Z-axis direction (namely, a thickness of the entire system) is strictly limited. For a device with sufficient sizes in the X-axis direction and Y-axis direction, a photosensitive chip 30 of a larger size may be disposed, to improve imaging quality. It may be understood that, for a specific optical lens 20 and a specific focusing distance, a distance from a rear end face of the optical lens 20 to the photosensitive chip 30 is specific. Therefore, if the optical lens 20 and the photosensitive chip 30 are placed along the X axis, all sizes from the rear end face of the optical lens 20 to the photosensitive chip 30 are in the X-axis direction. The reflector is disposed, and the back focal optical path of the optical lens 20 is arranged at a right angle. Compared with a design of a back focal straight optical path without a reflector, a design of introducing the reflector can shorten a size of the entire camera module 1 in the X-axis direction.

In this embodiment, the reflector may be disposed on a motor (not shown in the figure), and a location of the reflector in the Z-axis direction or the X-axis direction is adjusted, or a gradient of the reflector relative to a plane on which

the X axis and the Y axis are located is adjusted by using the motor. The reflector can rotate on the XZ plane with the Y axis as a rotation axis. In addition, the reflector can alternatively rotate on the XY plane with the Z axis as a rotation axis. It may be understood that the camera module 1 is prone to jitter in a process of collecting light. In this case, a transmission path of the light is prone to refraction, and consequently, an image taken by the camera module 1 is not good. In this embodiment, when the transmission path of the light is refracted, the motor can drive the reflector to rotate, to adjust the transmission path of the light by using the reflector, to implement focusing, reduce or avoid refraction of the transmission path of the light, and ensure that the camera module 1 has a good photographing effect. Therefore, the reflector can achieve an optical image stabilization effect.

In this application, the optical lens 20 may be applied to the camera module 1 shown in FIG. 3, and be applied to an automatic focusing or zooming camera module that needs to push the lens or the photosensitive chip 30 and the circuit board of the lens or the photosensitive chip 30 to perform large-stroke displacement, including a vertical camera module, a periscope camera module, and the like. The following describes the optical lens 20 in detail with reference to related accompanying drawings.

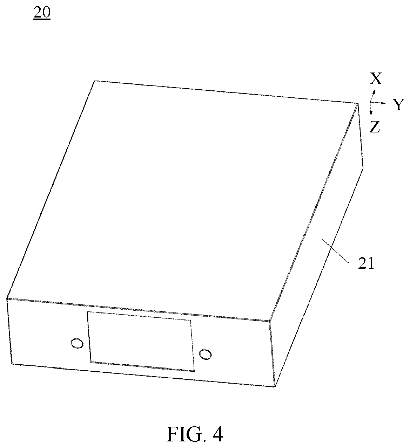

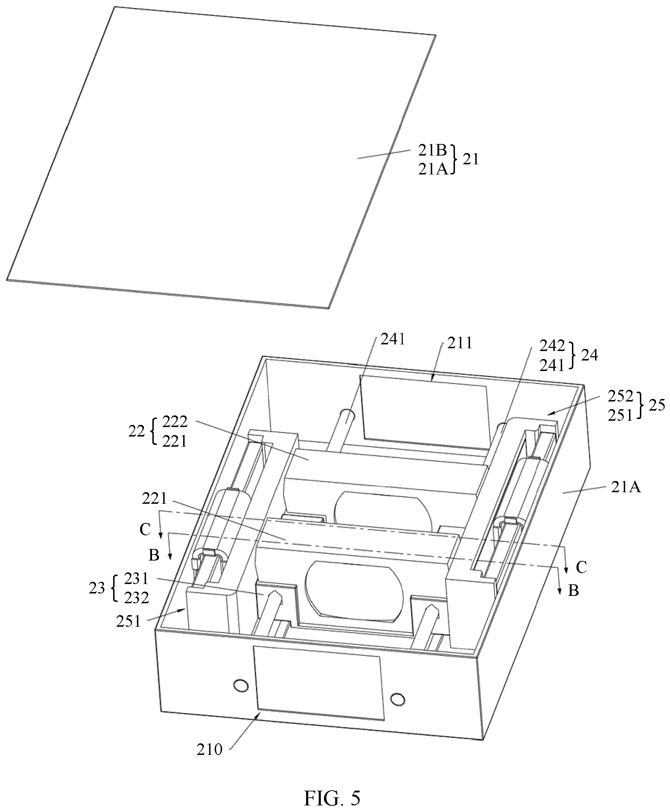

Refer to FIG. 4 and FIG. 5. FIG. 4 is a schematic diagram of a structure of the optical lens 20 shown in FIG. 3. FIG. 5 is a schematic diagram of an exploded structure of the optical lens 20 shown in FIG. 4.

The optical lens 20 includes a housing 21, a lens 22, a carrier 23, a slider 24, a drive component 25, and a lens circuit board (not shown in the figure). The housing 21 is enclosed to form accommodation space, the slider 24 is mounted on the housing 21, the lens 22 is mounted on the carrier 23, and the carrier 23 is located in the accommodation space and cooperates with the slider 24. That is, the carrier 23 is located on an inner side of the housing 21, and the carrier 23 can slide relative to the slider 24. Both the lens circuit board and the drive component 25 are disposed inside the housing 21, and the lens circuit board is electrically connected to the drive component 25, to drive, by using the drive component 25, the carrier 23 to drive the lens 22 to move in an optical axis direction of the lens 22. In addition, the lens circuit board is further electrically connected to the module circuit board 40, to implement information transmission with the mainboard 500 through the module circuit board 40. Certainly, in another embodiment, the slider 24 may alternatively be mounted on a surface of the housing 21.

In this embodiment, an extension direction of the slider 24 is the same as the optical axis direction of the lens 22, and the carrier 23 drives the lens 22 to slide along the extension direction of the slider 24, so that the lens 22 does not shake or tilt in a moving and focusing process. In addition, components such as the lens 22, the carrier 23, and the slider 24 are all accommodated inside the housing 21. This facilitates assembly and modularization of these components, thereby simplifying an assembly process of the camera module 1 and reducing costs of the camera module 1.

The housing 21 includes a first light transmission hole 210 and a second light transmission hole 211. The first light transmission hole 210 and the second light transmission hole 211 are disposed opposite on two sides of the housing 21, and both penetrate the inside and the outside of the housing 21. Light emitted from the light outlet surface 13 of the light rotating member 10 enters the optical lens 20 through the first light transmission hole 210, and after passing through the optical lens 20, is emitted to the outside of the optical lens 20 through the second light transmission hole 211.

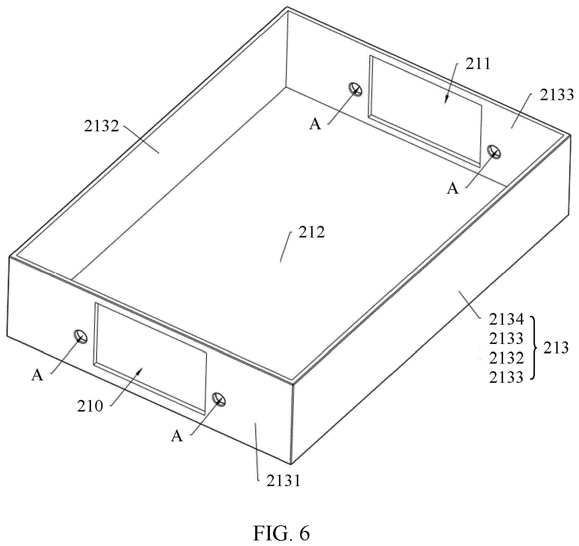

Refer to FIG. 5 and FIG. 6. FIG. 6 is a schematic diagram of a partial structure of the structure shown in FIG. 5.

In this embodiment, the housing 21 is approximately of a cuboid type. The housing 21 includes a main body 21A and a cover plate 21B. The main body 21A includes a bottom wall 212 and a side wall 213 fastened to the bottom wall 212. The bottom wall 212 and the side wall 213 jointly enclose space for accommodating components such as the carrier 23, the lens 22, and the drive component 25. The cover plate 21B covers an end that is of the side wall 213 and that is away from the bottom wall 212, to accommodate components such as the lens 22, the carrier 23, and the drive component 25 in the housing 21. The housing 21 in this embodiment includes two parts (the main body 21A and the cover plate 21B), to facilitate assembly of the optical lens 20. Certainly, in another embodiment, the housing 21 may alternatively be in another shape such as a square or a cylinder.

The side wall 213 includes a first side wall 2131, a second side wall 2132, a third side wall 2133, and a fourth side wall 2134 that are sequentially connected. The first side wall 2131 and the third side wall 2133 are oppositely disposed, and the second side wall 2132 and the fourth side wall 2134 are oppositely disposed. The first light transmission hole 210 is formed on the first side wall 2131, and the second light transmission hole 211 is formed on the third side wall 2133. A fastening hole A is further formed on the first side wall 2131 and the third side wall 2133. One end of the slider 24 is fastened to the fastening hole A on the first side wall 2131, and the other end is fastened to the fastening hole A on the second side wall 2132.

Certainly, in an implementation scenario of another embodiment, the first side wall 2131 and the second side wall 2132 may not be provided with a fastening hole, and the slider 24 may be fastened to the first side wall 2131 and the second side wall 2132 in another manner. In another implementation scenario of another embodiment, the slider 24 may be further fastened to the bottom wall 212 by using a connection structure. A manner in which the slider 24 is fastened to the housing 21 is not limited in this application.

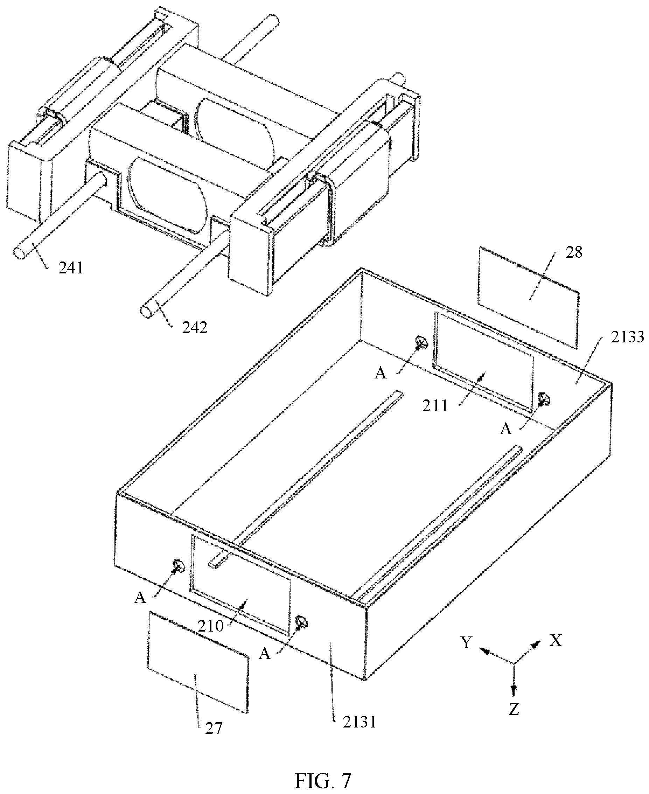

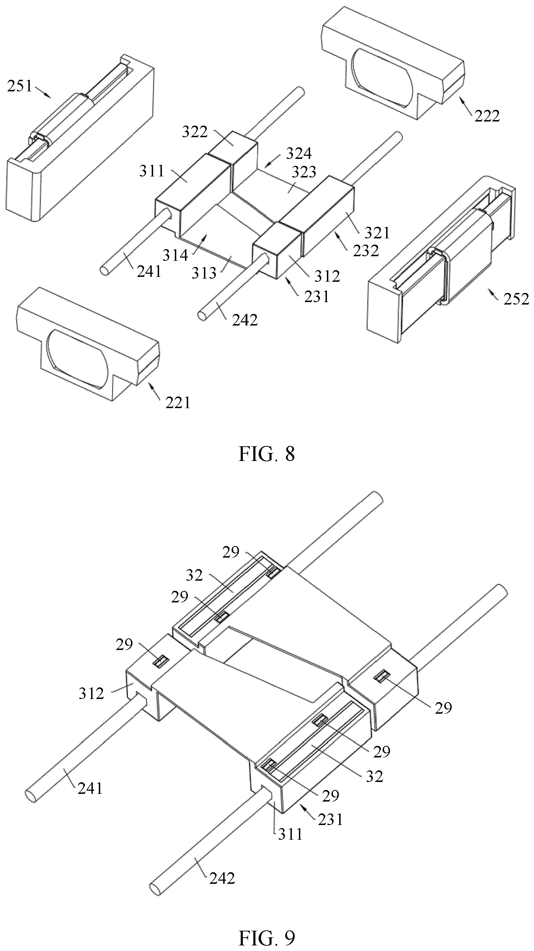

Refer to FIG. 5, FIG. 7, and FIG. 8. FIG. 7 is a schematic diagram of an exploded structure of a partial structure of the structure shown in FIG. 5. FIG. 8 is a schematic diagram of an exploded structure of a partial structure of the structure

shown in FIG. 7.

In this embodiment, the slider 24 includes a first slider 241 and a second slider 242, the carrier 23 includes a first carrier 231 and a second carrier 232, the lens 22 includes a first lens 221 and a second lens 222, and the drive component 25 includes a first drive component 251 and a second drive component 252. The first slider 241 and the second slider 242 are disposed at an interval, and both ends of the first slider 241 and the second slider 242 are respectively fastened to the fastening holes A of the first side wall 2131 and the third side wall 2133 that correspond to the first slider 241 and the second slider 242.

Certainly, in another embodiment, the carrier may alternatively include only the first carrier, and the lens may alternatively include only the first lens. In this scenario, the drive component may include only the first drive component, and there may be one or two first drive components. When there are two first drive components, the two first drive components are respectively located on two sides of the first carrier, and drive, on both sides of the first carrier, the first carrier to move.

As shown in FIG. 7 and FIG. 8, the first carrier 231 is slidably connected to the first slider 241 and the second slider 242, the first lens 221 is mounted on the first carrier 231, and the first drive component 251 is configured to drive the first carrier 231 to drive the first lens 221 to move along an extension direction of the slider. The second carrier 232 is slidably connected to the first slider 241 and the second slider 242, and is disposed in parallel with the first carrier 231. The second lens 222 is mounted on the second carrier 232, and the second drive component 252 is configured to drive the second carrier 232 to drive the second lens 222 to move along an extension direction of the slide shaft.

In this embodiment, the first carrier 231 and the second carrier 232 are guided by using the first slider 241 and the second slider 242. Compared with a guide structure such as a spring plate and a roll ball, this resolves a pain point that a driving force of the spring plate is weakened by an elastic force and the carrier 23 of the optical lens 20 cannot move in a large stroke, and further resolves a pain point that a driving instability is caused by a fall between roll balls, so that the carrier 23 can be smoothly driven in a long stroke.

In this embodiment, the first drive component 251 and the second drive component 252 respectively drive the first lens 221 and the second lens 222 to move in the direction of the optical axis, to adjust locations of the first lens 221 and the second lens 222. After light entering the optical lens 20 is jointly processed by the first lens 221 and the second lens 222, the light meets imaging quality (including correction of distortion, aberration, and the like), and is finally projected onto the photosensitive chip 30. In addition, the first lens 221 and the second lens 222 are driven to move in the X-axis direction, to change the first lens 221 and the second lens 222 to form an optical characteristic (including an aperture, a focal length, and the like), thereby achieving an optical zoom effect, and meeting a plurality of optical characteristics required for actual use.

As shown in FIG. 5 and FIG. 7, the optical lens 20 further includes a first lens 27 and a second lens 28. The first lens 27 is located on a light inlet side of the first lens 221, and the second lens 28 is located on a light outlet side of the second lens 222. Specifically, the first lens 27 may be fastened to a hole wall of the first light transmission hole 210, and the second lens 28 may be fastened to a hole wall of the second light transmission hole 211. In other words, the first lens 27 is fastened to the first side wall 2131 and is located in the first light transmission hole 210, and the second lens 28 is fastened to the third side wall 2133 and is located in the second light transmission hole 211. For example, the first lens 27 and the second lens 28 may be fastened to the first side wall 2131 and the third side wall 2133 through gluing, or may be fastened to the first side wall 2131 and the third side wall 2133 by using other fastening manners such as clamping, interference fitting, and the like.

It may be understood that, in this embodiment, the first lens 27 and the first side wall 2131 have an overlapping part in the X-axis direction, and the second lens 28 and the third side wall 2133 also have an overlapping part in the X-axis direction. This facilitates thinning of the optical lens in the X-axis direction. In addition, the first lens 27 and the second lens 28 are respectively mounted on the first side wall 2131 and the third side wall 2133, and no new fastening structure needs to be introduced to fasten the first lens 27 and the second lens 28. This helps simplify a structure of the optical lens 20.

Light from the light rotating member 10 is sequentially processed by the first lens 27, the first lens 221, the second lens 222, and the second lens 28 together, so that the light meets imaging quality (including correction of distortion, aberration, and the like), and finally is projected onto the photosensitive chip 30. In addition, the first lens 221 and the second lens 222 are driven to move in the X-axis direction, to change the first lens 27, the first lens 221, the second lens 222, and the second lens 28 form an optical characteristic (including an aperture, a focal length, and the like), thereby achieving an optical zoom effect, and meeting a plurality of optical characteristics required for actual use.

In this embodiment, the first lens 27 may include one or more lenses, and the second lens 28 may also include one or more lenses.

Certainly, in an implementation scenario of another embodiment, the optical lens may alternatively include only the first lens 27, and does not include the second lens. In still another implementation scenario of another embodiment, the optical lens may alternatively include only the second lens 28, and does not include the first lens. In still another implementation scenario of another embodiment, the first lens 27 and the second lens 28 may further be fastened to the housing 21 by using a fastening structure, and are respectively located on the light inlet side of the first lens 221 and the

light outlet side of the second lens 222.

As shown in FIG. 7 and FIG. 8, the first carrier 231 includes a first drive side 311 and a first driven side 312 that are disposed opposite to each other, and a first mounting part 313 located between the first drive side 311 and the first driven side 312. The first lens 221 is fastened to the first mounting part 313. The first lens 221 may be fastened to the first mounting part 313 through bonding, or may be fastened to the first mounting part 313 in another connection manner.

The first slider 241 penetrates the first drive side 311, and the second slider 242 penetrates the first driven side 312. The first drive component 251 is located on a side that is of the first drive side 311 and that is away from the first driven side 312, and the first drive component 251 drives the first drive side 311, so that the first carrier 231 drives the first lens 221 to slide, to implement focusing or zooming of the optical lens 20.

A groove 314 is formed between the first mounting part 313, the first drive side 311, and the first driven side 312. The first lens 221 is partially located in the groove 314, to limit the first lens 221, so that the first lens 221 is stably fastened to the first carrier 231. In addition, the first lens 221 is partially located in the groove 314. In other words, the first lens 221 and the first carrier 231 have an overlapping part in the Z-axis direction. This facilitates thinning of the optical lens 20 in the Z-axis direction. Certainly, in another embodiment, the first drive side 311, the first mounting part 313, and the first driven side 312 may also be sequentially connected to form a plane.

In some implementations, as shown in FIG. 8, the first carrier 231 is approximately in a trapezoid shape, the first drive side 311 is a long side of the trapezoid, and the first driven side 312 is a short side of the trapezoid. A pole length of the first drive side 311 is greater than a pole length of the first driven side 312. The pole length of the first drive side 311 is a length of contact between the first drive side 311 and the first slider 241. The pole length of the first driven side 312 is a length of contact between the first driven side 312 and the second slider 242.

It may be understood that the first drive component 251 drives the first drive side 311, so that the first drive side 311 drives the first carrier 231 and a component disposed on the first carrier 231 to move. In other words, a driving force of the first drive component 251 is applied to the first drive side 311. The pole length of the first drive side 311 is set to be greater than the pole length of the first driven side 312, so that the first drive side 311 is more easily to be subject to a force, so that the first carrier 231 is more stable and smooth in a sliding process. Certainly, in another embodiment, the first carrier 231 may be in another shape other than a trapezoid. Alternatively, the pole length of the first drive side 311 may be equal to or less than the pole length of the first driven side 312.

The second carrier 232 includes a second drive side 321 and a second driven side 322 that are disposed opposite to each other, and a second mounting part 323 located between the second drive side 321 and the second driven side 322. The second lens 222 is fastened to the second mounting part 323. The second lens 222 may be fastened to the second mounting part 323 through bonding, or may be fastened to the second mounting part 323 in another connection manner.

The first slider 241 penetrates the second driven side 322, and the second slider 242 penetrates the second drive side 321. The second drive component 252 is located on a side that is of the second drive side 321 and that is away from the second driven side 322, and the second drive component 252 drives the second drive side 321, so that the second carrier 232 drives the second lens 222 to slide, to implement focusing or zooming of the optical lens 20.

A groove 324 is formed between the second mounting part 323, the second drive side 321, and the second driven side 322, and the second lens 222 is partially located in the groove 324, to limit the second lens 222, so that the second lens 222 is stably fastened to the second carrier 232. In addition, the second lens 222 is partially located in the groove 324. In other words, the second lens 222 and the second carrier 232 have an overlapping part in the Z-axis direction. This facilitates thinning of the optical lens 20 in the Z-axis direction. Certainly, in another embodiment, the second drive side 321, the second mounting part 323, and the second driven side 322 may also be sequentially connected to form a plane.

In some implementations, the second carrier 232 is approximately in a trapezoid shape, the second drive side 321 is a long side of the trapezoid, and the second driven side 322 is a short side of the trapezoid. A pole length of the second drive side 321 is greater than a pole length of the second driven side 322. The pole length of the second drive side 321 is a length of contact between the second drive side 321 and the second slider 242, and the pole length of the second driven side 322 is a length of contact between the second driven side 322 and the first slider 241.

It may be understood that the second drive component 252 drives the second drive side 321, so that the second drive side 321 drives the second carrier 232 and a component disposed on the second carrier 232 to move. In other words, a driving force of the second drive component 252 is applied to the second drive side 321. The pole length of the second drive side 321 is set to be greater than the pole length of the second driven side 322, so that the second drive side 321 is more easily to be subject to a force, so that the second carrier 232 is more stable and smooth in a sliding process. Certainly, in another embodiment, the second carrier 232 may be in another shape other than a trapezoid. Alternatively, the pole length of the second drive side 321 may be equal to or less than the pole length of the second driven side 322.

In this implementation, the first drive side 311 and the second driven side 322 are located on a same side, and the first driven side 312 and the second drive side 321 are located on a same side. In other words, a side with a narrow width of the first carrier 231 and a side with a wide width of the second carrier 232 are located on a same side, and a side with a wide width of the first carrier 231 and a side with a narrow width of the second carrier 232 are located on a same side. Therefore, sizes of the first carrier 231 and the second carrier 232 in the optical axis direction are smaller. This facilitates

miniaturization of the optical lens 20 in the X-axis direction. In addition, a distance between the first carrier 231 and the second carrier 232 may be adjusted closer than that obtained when the first drive side 311 and the second drive side 321 are located on the same side. This facilitates a zoom requirement of the optical lens 20.

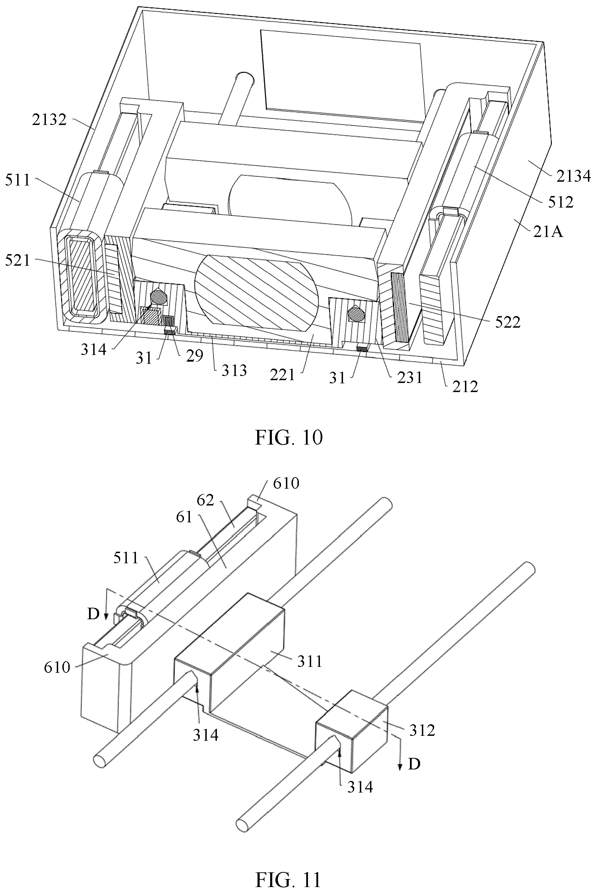

Refer to FIG. 9 and FIG. 10. FIG. 9 is a schematic diagram of a structure of a partial structure of the structure shown in FIG. 8 from another angle. FIG. 10 is a schematic diagram of a cross-sectional structure of a partial structure of the structure shown in FIG. 5 in a B-B direction.

The optical lens 20 further includes a magnetic member 29 and a magnetic conductive strip 31. The magnetic conductive strip 31 is fastened to the bottom wall 212 of the housing 21, the magnetic member 29 is fastened to the first carrier 231, and is disposed opposite to the magnetic conductive strip 31, and a magnetic attraction force is generated between the magnetic conductive strip 31 and the magnetic member 29, so that the first carrier 231 is closely attached to the first slider 241 and the second slider 242.

In this embodiment, the magnetic member 29 is fastened to a side that is of the first carrier 231 and that faces away from the first lens 221, the magnetic conductive strip 31 is fastened to the bottom wall 212 of the main body 21A, and a magnetic attraction force is generated between the magnetic member 29 and the magnetic conductive strip 31, so that the first wall surface 3141 and the second wall surface 3142 are closely attached to the first slider 241. Certainly, in another embodiment, the magnetic member may be alternatively fastened on a side that is of the first carrier and that faces the cover plate, the magnetic conductive strip is disposed on the cover plate, and a magnetic repulsion force is generated between the magnetic member and the magnetic conductive strip, so that the first wall surface 3141 and the second wall surface 3142 are closely attached to the first slider 241.

It may be understood that, in this embodiment, the magnetic member 29 is disposed on the side that is of the first carrier 231 and that faces away from the first lens 221, and the magnetic conductive strip 31 that is disposed opposite to the magnetic member 29 is disposed. There is a magnetic static force between the magnetic conductive strip 31 and the magnetic member 29, so that the first carrier 231 is closely attached to the first slider 241 and the second slider 242, and when the first carrier 231 slides relative to the first slider 241 and the second slider 242, the first carrier 231 is always in close contact with the first slider 241 and the second slider 242, to ensure that the first carrier 231 does not tilt in a sliding process, and a focusing or zooming effect of the optical lens 20 is not affected. This improves an imaging quality.

In this embodiment, there are two magnetic conductive strips 31, and the two magnetic conductive strips 31 are disposed on the bottom wall 212 of the main body 21A at an interval, and respectively correspond to the first drive side 311 and the first driven side 312. There are three magnetic members 29, two magnetic members 29 are disposed on the first drive side 311 at an interval along an extension direction of the guide rail, and a magnetic conductive strip 31 corresponding to the first drive side 311 generates a magnetic attraction force. One magnetic member 29 is disposed in the middle of the first driven side 312, and a magnetic conductive strip 31 corresponding to the first driven side 312 generates a magnetic attraction force.

In this embodiment, there are three magnetic members 29, that is, the first carrier 231 is subject to three magnetic attraction forces, to ensure that the first carrier 231 is subject to a balanced force. Centers of magnetic attraction forces of the three magnetic members 29 and the corresponding magnetic conductive strips 31 coincide with the first carrier 231 and the center of mass of the first lens 221 fastened to the first carrier 231, so that the first carrier 231 is more stably attached to the first slider 241 and the second slider 242.

In this embodiment, the three magnetic members 29 are all embedded in the corresponding first drive side 311 and the corresponding first driven side 312, to facilitate thinning of the optical lens 20 in the Z-axis direction, and reduce occupied space of the electronic device 1000.

Certainly, in another embodiment, there may be a plurality of magnetic members 29, some magnetic members 29 are disposed on the first drive side 311, and some magnetic members 29 are disposed on the first driven side 312. A quantity of magnetic members 29 disposed on the first drive side 311 is greater than a quantity of magnetic members 19 disposed on the first driven side 312. Because the pole length of the first drive side 311 is greater than the pole length of the first driven side 312, it is limited the quantity of magnetic members 29 disposed on the first drive side 311 is greater than the quantity of magnetic members 19 disposed on the first driven side 312, so that the first carrier 231 is more stably attached to the first slider 241 and the second slider 242.

It may be understood that, in an architecture in which the first drive component 251 drives the first carrier 231 and the first lens 221, in this embodiment, a driving force of the first drive component 251 for the first carrier 231 is calculated as 35.9 mN. To ensure a safety margin, a maximum driving force used is 30 mN. A mass of the first carrier 231 and the first lens 221 is 1.8 g, gravity is 18 mN, and a usable driving force margin is 12 mN.

To ensure that the first carrier 231 is closely attached to the first slider 241 and the second slider 242 in a moving process, a magnetic attraction force of the magnetic member 29 and the magnetic conductive strip 31 needs to be increased as much as possible. However, an increase of the magnetic attraction force causes an increase of friction (resistance) between the first carrier 231 and the first slider 241 and between the first carrier 231 and the second slider 242. This poses a challenge to a driving force of the first drive component 251 for driving the first carrier 231.

In this embodiment, smooth layers are disposed on surfaces of the first slider 241 and the second slider 242, to

reduce friction coefficients of the first slider 241 and the second slider 242, so that the friction coefficients of the first slider 241 and the second slider 242 are less than 0.15. A material of the first slider 241 and a material of the second slider 242 may be stainless steel, aluminum alloy, magnesium alloy, carbon fiber, or the like. Specifically, the smooth layer may be formed by using an electroplating process, a coating process, or a lubricating oil coating manner for the first slider 241 and the second slider 242, and the friction coefficients of the first slider 241 and the second slider 242 may be reduced to 0.05 to 0.1. This effectively reduces resistance between the first carrier 231, the first slider 241, and the second slider 242.

Based on the foregoing data, a magnetic attraction force of 8 times gravity is set. In this embodiment, three magnetic members 29 are disposed, and the three magnetic members 29 and magnetic conductive strips 31 corresponding to the three magnetic members 29 jointly provide a magnetic static force of 142.41 mN.

Certainly, in another embodiment, a driving force of the first drive component 251 for the first carrier 231 is different, magnetic attraction forces of the three magnetic members 29 also need to be set to be different, and sizes of the magnetic members 29 may also be different.

As shown in FIG. 9, a magnetic member 29 is also disposed on the second carrier 232, and a manner and a location of disposing the magnetic member 29 on the second carrier 232 are the same as those of disposing the magnetic member 29 on the first carrier 231. Because the first carrier 231 and the second carrier 232 may get close to each other, when the first carrier 231 and the second carrier 232 are close to each other, spacing between the magnetic members 29 disposed on the first carrier 231 and the second carrier 232 needs to be large enough, to avoid mutual interference between the magnetic member 29 disposed on the first carrier 231 and the magnetic member 29 disposed on the second carrier 232.

In this embodiment, a length of the magnetic conductive strip 31 is greater than or equal to a maximum travel range of the first carrier 231 and the second carrier 232. It may be understood that a location that the first carrier 231 can move to the farthest in a direction away from the second carrier 232 is a first location, a location that the second carrier 232 can move to the farthest in a direction away from the first carrier 231 is a second location, and the maximum travel range of the first carrier 231 and the second carrier 232 is a distance between the first location and the second location. A length of the magnetic conductive strip 31 is limited to be greater than or equal to the maximum travel range of the first carrier 231 and the second carrier 232, to ensure that the first carrier 231 and the second carrier 232 can be closely attached to the first slider 241 and the second slider 242 when moving to any location.

Refer to FIG. 10 again. The first lens 221 may include a lens tube and at least one lens fastened on an inner side of the lens tube. For example, there may be a plurality of lenses, and optical axes of the plurality of lenses coincide to form a lens group, to implement better optical performance. The lens tube may be fastened to the first mounting part 313 of the first carrier 231 through dispensing and bonding. Certainly, in some embodiments, the lens tube and the first carrier 231 may alternatively be an integrated structure, so that steps of fastening the lens tube to the first carrier 231 are reduced, and assembly efficiency of the optical lens 20 is improved. Alternatively, the first lens 221 may further include a positioning structure, and the positioning structure cooperates with the first carrier 231 to prevent the first lens 221 from being loose.

The second lens 222 may include a lens tube and at least one lens fastened on an inner side of the lens tube. For example, there may be a plurality of lenses, and optical axes of the plurality of lenses coincide to form a lens group, to implement better optical performance. The lens tube may be fastened to the second mounting part of the second carrier through dispensing and bonding. Certainly, in some embodiments, the lens tube and the second carrier may alternatively be an integrated structure, so that steps of fastening the lens tube to the second carrier are reduced, and assembly efficiency of the optical lens 20 is improved. Alternatively, the second lens 222 may further include a positioning structure, and the positioning structure cooperates with the second carrier 232 to prevent the second lens 222 from being loose.

As shown in FIG. 8 and FIG. 10, the drive component 25 includes a first drive component 251 and a second drive component 252. The first drive component 251 includes a first coil 511 and a first drive magnet 521, and the second drive component 252 includes a second coil 512 and a second drive magnet 522. The first drive magnet 521 is fastened to the first carrier 231, and the first coil 511 is disposed relative to the first drive magnet 521, and is located on a side that is of the first drive magnet 521 and that is away from the first carrier 231. The second drive magnet 252 is fastened to the second carrier 232, and the second coil 512 is disposed relative to the second drive magnet 522, and is located on a side that is of the second drive magnet 522 and that is away from the second carrier 232. Certainly, the first drive component and the second drive component may alternatively implement driving by using another structure like a motor.

The first drive magnet 521 is fastened to the first drive side 311 of the first carrier 231. For example, in this embodiment, the first coil 511 is fastened to the second side wall 2132. The first coil 511 is electrically connected to the lens circuit board. The lens circuit board is configured to control the first coil 511 to be powered on, a positive/counterclockwise current is passed through the first coil 511, and the first drive magnet 521 drives, under a reaction force of a Lorentz force, the first carrier 231 to drive the first lens 221 to move along an axial direction of the slider 24.

The second drive magnet 522 is fastened to the second drive side 321 of the second carrier 232. For example, in this embodiment, the second coil 512 is fastened to the fourth side wall 2134. The second coil 512 is electrically connected to the lens circuit board. The lens circuit board is configured to control the second coil 512 to be powered on, a positive/counterclockwise current is passed through the second coil 512, and the second drive magnet 522 drives, under

a reaction force of a Lorentz force, the second carrier 232 to drive the second lens 222 to move along the axial direction of the slider 24.

It may be understood that a specific manner of fitting the first carrier 231 with the first drive component 251 and the slider 24 is the same as a specific manner of fitting the second carrier 232 with the second drive component 252 and the slider 24. The following uses the first carrier 231, the first drive component 251, and the slider 24 as an example for description.

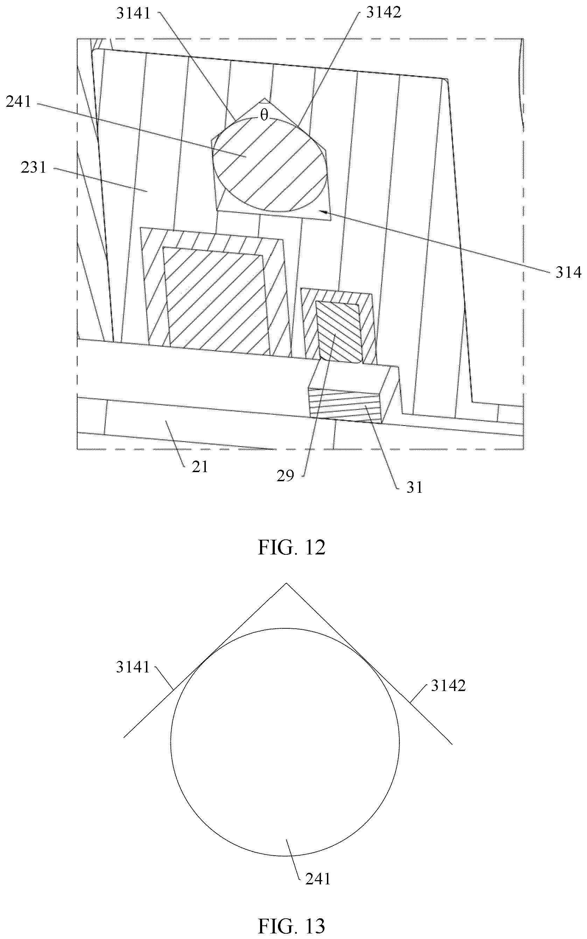

Refer to FIG. 11 and FIG. 12. FIG. 11 is a schematic diagram of a partial structure of the structure shown in FIG. 7. FIG. 12 is a schematic diagram of a partially enlarged structure of the structure shown in FIG. 10.

The first carrier 231 is provided with a guide rail 314 extending along an optical axis direction of the lens 22. For example, there are two guide rails 314, one guide rail 314 is disposed on the first drive side 311, and one guide rail 314 is disposed on the first driven side 312. The first slider 241 penetrates the guide rail 314 located on the first drive side 311, and the second slider 242 penetrates the guide rail 314 located on the first driven side 312.

It may be understood that, fitting relationships between the two guide rails 314 and the corresponding sliders 24 are the same. The following uses the first slider 241 and the corresponding guide rail 314 as an example for description.

In this embodiment, the guide rail 314 is a sliding hole, that is, a cross section of the guide rail 314 is of a hole type. The guide rail 314 includes the first wall surface 3141 and the second wall surface 3142 between which an included angle is formed, that is, the first wall surface 3141 and the second wall surface 3142 are V-shaped. The first slider 241 is in contact with the first wall surface 3141 and the second wall surface 3142, and an included angle $\theta$ between the first wall surface 3141 and the second wall surface 3142 is within a range from 40° to 170° (including 40° and 170°). The magnetic conductive strip 31 and the magnetic member 29 generate a magnetic suction force, so that the first wall surface 3141 and the second wall surface 3142 are pressed against the first slider 241.

Certainly, in another embodiment, the first wall surface 3141 and the second wall surface 3142 may alternatively be in a shape of an inverted trapezoid, a semicircle, a bowl, or the like that has a balance point that bears forces symmetrically. Alternatively, the guide rail 314 may be a sliding slot, that is, a cross section of the guide rail 314 is of a slot type.

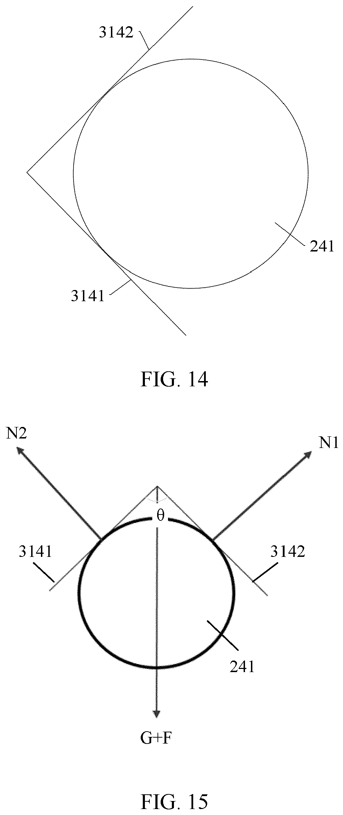

It may be understood that, when the user uses the electronic device 1000 to take a photo, different shooting angles such as overlooking shooting, vertical shooting, horizontal shooting, and oblique shooting are used. Because shooting angles are different, tilt angles of the electronic device 1000 are different. For example, as shown in FIG. 13, when the shooting angle is an overlooking shooting angle, a display 200 of the electronic device 1000 faces upward, and the first wall surface 3141 and the second wall surface 3142 are located above the first slider 241. As shown in FIG. 14, when the shooting angle is vertical shooting, and the user places the electronic device 1000 in a vertical state, the display 200 of the electronic device 1000 faces the user, and the first wall surface 3141 and the second wall surface 3142 are located on a left side of the first slider 241.

That is, when the electronic device 1000 is at different shooting angles, location relationships between the first slider 241 and the first wall surface 3141 and between the first slider 241 and the second wall surface 3142 are different, and the first slider 241 is subject to different forces of the first wall surface 3141 and the second wall surface 3142. Therefore, the first carrier 231 is attached to the first slider 241 by different forces.

It may be understood that, when the electronic device 1000 is at different shooting angles, the first carrier 231 and the first slider 241 have different degrees of conformity. As a result, when the electronic device 1000 is at a shooting angle, the first carrier 231 is closely attached to the first slider 241, and the first carrier 231 moves smoothly in a moving process. However, when the electronic device 1000 is at another shooting angle, the first carrier 231 is not closely attached to the first slider 241, and the first carrier 231 tilts relative to the slider 24 in a moving process.

However, in a conventional technology, in a photographing process of the electronic device 1000 at a plurality of shooting angles, the first carrier 231 can move stably relative to the first slider 241 only at a shooting angle, and a deviation occurs when the first carrier 231 cannot move relative to the first slider 241 at another shooting angle.

In view of this, the guide rail 314 provided in this application includes the first wall surface 3141 and the second wall surface 3142 between which an included angle is formed. The first slider 241 is in contact with the first wall surface 3141 and the second wall surface 3142, and an included angle $\theta$ between the first wall surface 3141 and the second wall surface 3142 is within the range from 40° to 170° (including 40° and 170°). In this application, a value of the included angle $\theta$ is limited within the range from 40° to 170° (including 40° and 170°), so that the first carrier 231 can be closely attached to the first slider 241 regardless of whether the electronic device 1000 is at an overlooking shooting angle, a vertical shooting angle, or another shooting angle. When the first carrier 231 moves relative to the first slider 241, it is ensured that the first carrier 231 does not deviate and moves smoothly. This ensures an imaging quality and effect of the electronic device 1000, and improves user experience.

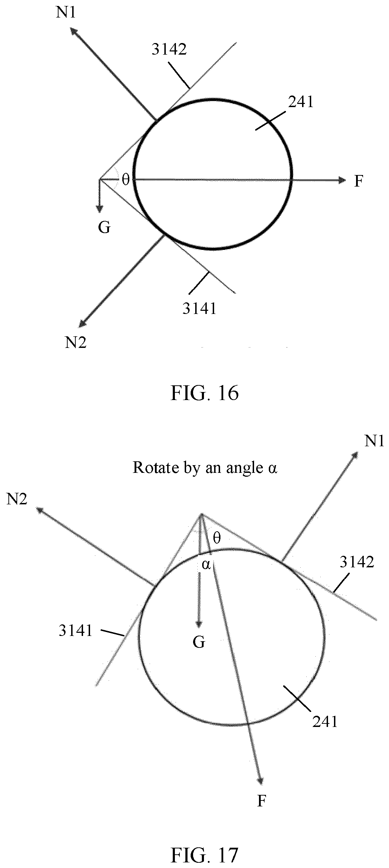

Specifically, refer to FIG. 15 and FIG. 16. FIG. 15 is a schematic diagram of the first wall surface 3141, the second wall surface 3142, and the first slider 241 when the electronic device 1000 shown in FIG. 1 performs overlook shooting. FIG. 16 is a schematic diagram of the first wall surface 3141, the second wall surface 3142, and the first slider 241 when the electronic device 1000 shown in FIG. 1 performs vertical shooting.

As shown in FIG. 15 and FIG. 16, a support force of the first slider 241 for the first wall surface 3141 is N1, a support force for the second wall surface 3142 is N2, gravity of the first carrier 231 and the first lens 221 attached to the first carrier 231 is G, a magnetic attraction force between the magnetic member 29 and the magnetic conductive strip 31 is F, and the angle between the first wall surface 3141 and the second wall surface 3142 is $\theta$. When the electronic device performs photographing, a shooting angle may be represented by an angle at which the electronic device 1000 rotates along an optical axis. When the electronic device 1000 performs overlooking shooting, an angle at which the electronic device 1000 rotates is $\alpha = 90°$, and when the electronic device 1000 performs vertical shooting, an angle at which the electronic device 1000 rotates is $\alpha = 0°$.

When $\alpha = 90°$, the following may be obtained:

$$F = N1\cos((\pi - \theta)/2) + N2\cos((\pi - \theta)/2)$$

$$N1\sin((\pi - \theta)/2) = N2\sin((\pi - \theta)/2) + G$$

$$F = nG$$

By combining the foregoing three formulas, the following may be obtained:

$$N1 = G/2\ (n/\cos((\pi - \theta)/2) + 1/\sin((\pi - \theta)/2))$$

$$N2 = G/2\ (n/\cos((\pi - \theta)/2) - 1/\sin((\pi - \theta)/2))$$

It is assumed as follows:

$$\varphi = (\pi - \theta)/2$$

$N_1$ is used to perform derivation on $\varphi$, and the derivative is set to 0 to obtain an extremum.

$$(N1) = G/2\ ((n\cdot\sin\varphi)/\cos\hat{}2\varphi - \cos\varphi/\sin\hat{}2\varphi) = 0$$

$$\tan\hat{}3\varphi = 1/n$$

The following may be obtained through calculation:

$$\varphi = \arctan(\sqrt[3]{(1/n)})$$

In this embodiment, if $n = 8$, $\varphi = 26.565°$ is obtained, and $\theta = 126.87°$.

$\alpha$ is extended to any angle. FIG. 17 shows force analysis, and equations of force can be combined:

$$F + G\cos\alpha = N1\cos((\pi - \theta)/2) + N2\cos((\pi - \theta)/2)$$

$$N1\sin((\pi - \theta)/2) + G\sin\alpha = N2\sin((\pi - \theta)/2)$$

The following may be obtained through calculation:

$$N1 = G/2\ ((n + \cos\alpha)/\cos((\pi - \theta)/2) - \sin\alpha/\sin((\pi - \theta)/2))$$

$$N2 = G/2\ ((n + \cos\alpha)/\cos((\pi - \theta)/2) + \sin\alpha/\sin((\pi - \theta)/2))$$

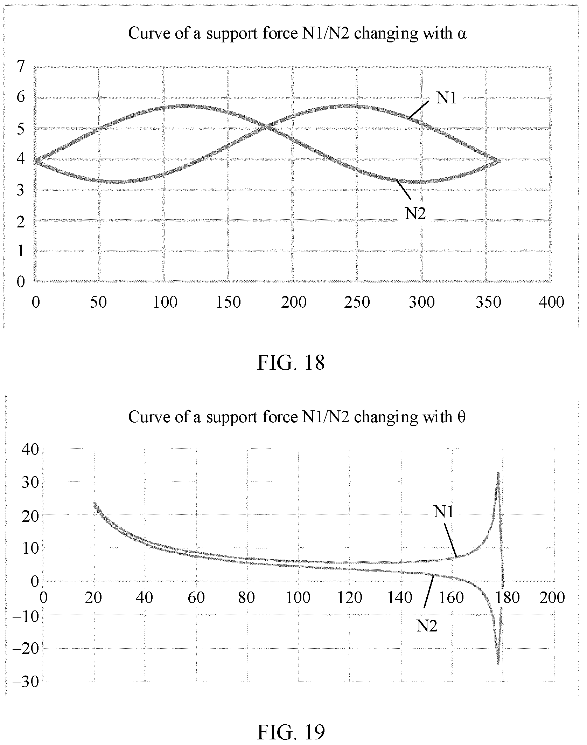

A curve of N1/N2 changing with $\alpha$ is shown in FIG. 18 by taking an extreme point $\theta = 126.87°$. It can be learned

from FIG. 18 that a support force N1/N2 of the first wall surface 3141 and the second wall surface 3142 changes with $\alpha$ at a cycle of 360°. To make the first carrier 231 move stably and smoothly, it is expected that N1/N2 is as close as possible at any shooting angle, so that friction forces of the first wall surface 3141 and the second wall surface 3142 are similar, and no torque is generated.

$$N2 - N1 = G\sin\alpha/\sin((\pi - \theta)/2)$$

It can be learned from the foregoing formula that a difference between N2 and N1 varies in a sinusoidal manner with $\alpha$, and reaches an extreme value when $\alpha$ = 90°. Therefore, a vertical shooting state in FIG. 16 is an extreme state of N2 - N1. If a difference between N2 and N1 of the vertical shooting state in FIG. 16 is acceptable, another posture is also acceptable.

Refer to FIG. 18 and FIG. 19. FIG. 19 is a curve diagram of N1 and N2 changing with $\theta$. A vertical coordinate is a ratio (N/G) of the support force N1/N2 to the gravity G, and a horizontal coordinate is $\theta$ (20° to 180°).

It can be learned from FIG. 18 and FIG. 19 that, to reduce a gradient of the first carrier 231 during movement, it needs to be ensured that friction forces of the first wall surface 3141 and the second wall surface 3142 are consistent or roughly consistent. Therefore, corresponding support forces N1 and N2 should also be close to each other. When $\theta$ > 170°, N2 gradually decreases, N1 gradually increases, and a difference between N1 and N2 is excessively large. Therefore, $\theta \leq$ 170° needs to be set. In addition, a thrust margin is considered, and the support force N1/N2 needs to meet the following condition: Friction coefficient $\mu$ * (N1 + N2) < 12 mN. Therefore, N1 + N2 < 13.3 G. According to FIG. 19, $\theta \geq$ 40°. In conclusion, the V-shaped groove angle $\theta$ needs to meet the following condition: 40° $\leq \theta \leq$ 170°.

In this embodiment, the included angle $\theta$ between the first wall surface 3141 and the second wall surface 3142 is within a range from 70° to 120° (including 70° and 120°). For example, the included angle $\theta$ may be an angle like 70°, 74°, 80°, 88°, 95°, 100°, or 120°, to ensure a thrust of the first drive component 251 on the first carrier 231, and further ensure that the first carrier 231 does not tilt or deviate in a moving process regardless of a shooting angle of the electronic device 1000. Certainly, in another embodiment, the angle between the first wall surface 3141 and the second wall surface 3142 may be further determined based on the thrust of the first drive component 251 on the first carrier 231 and a magnetic attraction force between the magnetic conductive strip 31 and the magnetic member 29.

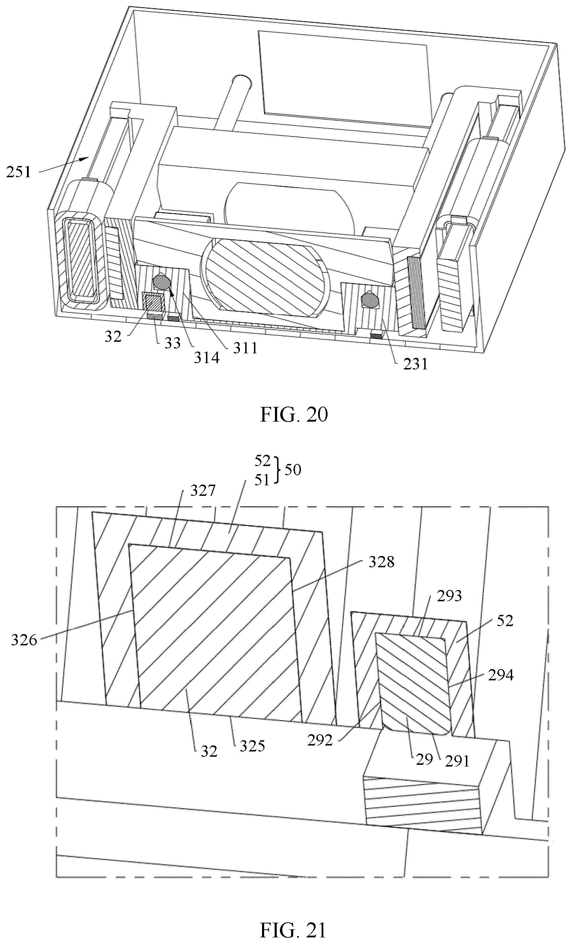

Refer to FIG. 9 and FIG. 20. FIG. 20 is a schematic diagram of a cross-sectional structure of a partial structure of the structure shown in FIG. 5 in a C-C direction.

The optical lens 20 further includes a sensing magnet 32 and a Hall effect sensor 33, the sensing magnet 32 is fastened to the first carrier 231 and is disposed adjacent to the magnetic member 29 (located on the first drive side 311), and the Hall effect sensor 33 is disposed opposite to the sensing magnet 32. Specifically, the sensing magnet 32 is fastened to the first drive side 311, and is disposed adjacent to the magnetic member 29 fastened to the first drive side 311. The sensing magnet 32 is disposed on a side that is of the magnetic member 29 (located on the first drive side 311) and that is away from the first driven side 312. The Hall effect sensor 33 is fastened to the bottom wall 212 of the main body 21A, and is electrically connected to the lens circuit board. Certainly, in another embodiment, the sensing magnet may alternatively be fastened to a side that is of the first carrier and that faces the cover plate, and the Hall effect sensor is fastened to the cover plate.

The Hall effect sensor 33 in this embodiment is configured to detect a magnetic field intensity when the sensing magnet 32 is at different locations. It may be understood that when the first carrier 231 moves towards a target location along the X-axis direction, the first carrier 231 is likely to not move to the target location. In this implementation, a magnetic field intensity at a location at which the sensing magnet 32 is located is measured, and whether the magnetic field intensity is equal to a preset magnetic field intensity at the target location is determined by using the Hall effect sensor 33. When the magnetic field intensity is not equal to the preset magnetic field intensity at the target location, the first drive component 251 can continue to push the first carrier 231 to move along the X-axis direction, so that the first carrier 231 accurately moves to the target location. Therefore, by disposing the Hall effect sensor 33 and the sensing magnet 32, accuracy of driving the first lens 221 by the first carrier 231 to move along the X-axis direction can be significantly improved.

Certainly, in an implementation of another embodiment, the sensing magnet 32 may alternatively be disposed on a side that is of the magnetic member 29 (located on the first drive side 311) and that is close to the first driven side 312. In another implementation of the another embodiment, the optical lens 20 may further include a location sensor other than a sensing magnet and a Hall effect sensor, configured to sense a location of the first carrier 231.

In this embodiment, the sensing magnet 32 is embedded in the first drive side 311, to facilitate thinning of the optical lens 20 in the Z-axis direction, and reduce occupied space of the electronic device 1000.

It may be understood that because space of the first carrier 231 is limited, spacing between the sensing magnet 32 and the magnetic member 29 is very small, and a problem of magnetic interference easily occurs between the sensing magnet 32 and the magnetic member 29.

Refer to FIG. 20 and FIG. 21. FIG. 21 is a partially enlarged schematic diagram of the structure shown in FIG. 10.

The optical lens 20 in this embodiment further includes a shielding member 50. The shielding member 50 is configured to restrict a magnetic field direction of the sensing magnet 32 and/or restrict a magnetic field direction of the magnetic member 29, to shield magnetic interference between the sensing magnet 32 and the magnetic member 29. Specifically, the shielding member 50 includes a first shielding member 51 and a second shielding member 52. The first shielding member 51 is configured to restrict a magnetic field direction of the sensing magnet 32, and the second shielding member 52 is configured to restrict a magnetic field direction of the magnetic member 29, to avoid magnetic interference between the sensing magnet 32 and the magnetic member 29, and avoid that the magnetic interference affects detection precision of the Hall effect sensor 33.

In this embodiment, the first shielding member 51 and the second shielding member 52 may be made of a magnetic shielding material. The magnetic shielding material may be, for example, a magnetic conductive material like carbon steel, a metal injection molding material, nanocrystalline, or a soft magnetic material.

For example, the sensing magnet 32 includes a bottom surface 325, a first side surface 326, a top surface 327, and a second side surface 328 that are sequentially connected. The bottom surface 325 faces the Hall effect sensor 33, and the first shielding member 51 wraps the first side surface 326, the top surface 327, and the second side surface 328 of the sensing magnet 32. The magnetic member 29 includes a first surface 291, a second surface 292, a third surface 293, and a fourth surface 294 that are sequentially connected. The first surface 291 faces the corresponding magnetic conductive strip 31, and the second shielding member 52 wraps the second surface 292, the third surface 293, and the fourth surface 294 of the magnetic member 29. In this embodiment, the first shielding member 51 and the second shielding member 52 separately wrap the sensing magnet 32 and the magnetic member 29 in three surfaces, to avoid mutual magnetic interference between the sensing magnet 32 and the magnetic member 29.

It may be understood that a magnetic field of the sensing magnet 32 is distributed in a radial manner, and only a partial magnetic field intensity of the sensing magnet 32 can be used. If the magnetic field intensity is increased, a magnetic interference problem is more prominent. In this embodiment, the first shielding member 51 wraps the sensing magnet 32, to enhance a magnetic field intensity in a directional manner, and a magnetic line of the sensing magnet 32 is constrained around the sensing magnet 32, so that the magnetic field of the sensing magnet 32 is more inclined to the Hall effect sensor 33. This improves sensing precision of the Hall effect sensor 33, and reduces interference caused by the sensing magnet 32 to another magnet. Similarly, the magnetic field of the magnetic member 29 is also distributed in a radial manner. The second shielding member 52 wraps the magnetic member 29, so that a magnetic field intensity of the magnetic member 29 can also be increased in a directional manner. A magnetic line of the magnetic member 29 is constrained around the magnetic member 29, so that a magnetic attraction force between the magnetic member 29 and the magnetic conductive strip 31 is stronger. Therefore, the magnetic member 29 can be smaller, and spacing between the magnetic member 29 and the sensing magnet 32 may also be smaller. At the same time, this can reduce the magnetic interference of the magnetic member 29 to the sensing magnet 32.

In addition, the sensing magnet 32 and the magnetic member 29 are separately wrapped by corresponding shielding members. This further helps reduce interference caused by the sensing magnet 32 and the magnetic member 29 to a peripheral device.

Certainly, in another embodiment, the first shielding member 51 may further wrap the sensing magnet 32 on one to six surfaces other than three surfaces. The second shielding member 52 may further wrap the magnetic member 29 on one to six surfaces other than three surfaces.

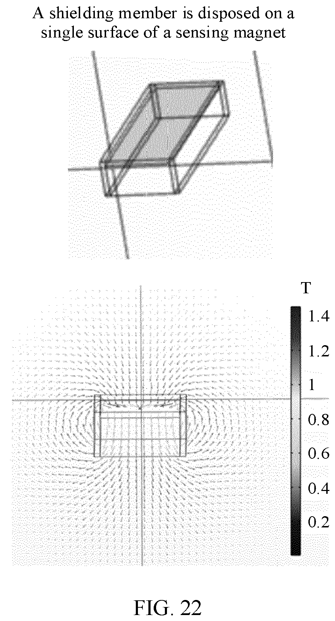

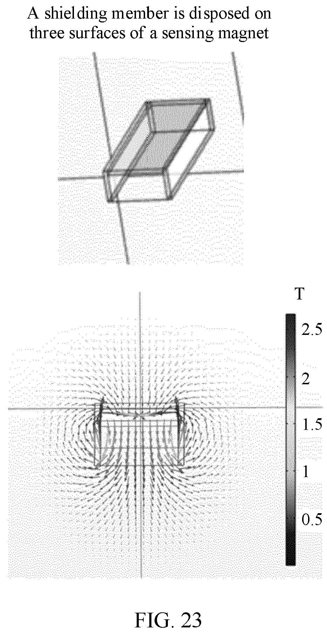

Refer to FIG. 22 and FIG. 23. FIG. 22 is a magnetic field simulation diagram obtained when the shielding member 50 is disposed on a single surface of the sensing magnet 32. FIG. 23 is a magnetic field simulation diagram obtained when the shielding member 50 is disposed on three surfaces of the sensing magnet 32.

FIG. 22 and FIG. 23 are compared, and it can be learned that, compared with the shielding member 50 disposed on three surfaces of the sensing magnet 32, the shielding member 50 disposed on a single surface of the sensing magnet 32 can more effectively constrain a magnetic line of the sensing magnet 32 around the sensing magnet 32. This effectively enhances a magnetic field intensity of the sensing magnet 32, and more effectively reduces interference of a sensing magnetic field to peripheral components.

Certainly, in an implementation of another embodiment, there may be one shielding member 50, and the shielding member 50 is disposed between the sensing magnet 32 and the magnetic member 29, to avoid magnetic interference between the sensing magnet 32 and the magnetic member 29. In another implementation of another embodiment, the optical lens 20 may not be provided with a shielding member configured to restrict a magnetic field direction of a sensing magnet or a magnetic field direction of a magnetic member.

It may be understood that a sensing magnet is also disposed on the second carrier 232, and a Hall effect sensor disposed opposite to the sensing magnet is disposed on the bottom wall 212. By disposing the Hall effect sensor and the sensing magnet, accuracy of driving the second lens 222 by the second carrier 232 to move along the X-axis direction can be significantly improved. Magnetic interference between the sensing magnet and the magnetic member that are disposed on the second carrier 232 may be avoided by using a shielding member. For a manner of disposing the shielding member, refer to a manner of disposing the shielding member of the sensing magnet and the magnetic member that correspond to

the first carrier 231. Details are not described again.

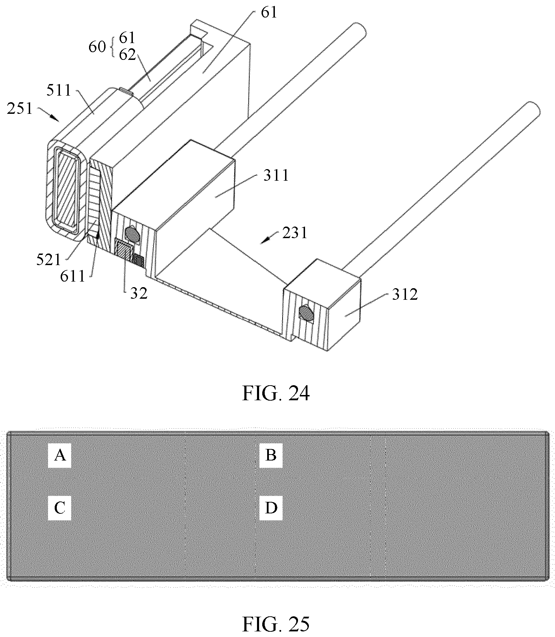

Refer to FIG. 8, FIG. 11, and FIG. 24. FIG. 24 is a schematic diagram of a cross-sectional structure of the structure shown in FIG. 11 in a D-D direction.

The first drive component 251 further includes a magnetic shielding member 60. The magnetic shielding member 60 includes a first side panel 61 and a second side panel 62 that are disposed opposite to each other, a side that is of the first side panel 61 and that faces away from the second side panel 62 is fastened to the first carrier 231, the second side panel 62 penetrates the first coil 511, and the first drive magnet 252 is disposed on a side that is of the first side panel 61 and that faces the second side panel 62. Certainly, in another embodiment, the first drive component may not include a magnetic shielding member.

It may be understood that the second drive component 252 may also include a magnetic shielding member 60. A manner in which the magnetic shielding member 60 cooperates with the first drive component 251 is the same as a manner in which the magnetic shielding member 60 cooperates with the second drive component 252. The following uses an example in which the magnetic shielding member 60 cooperates with the first drive component 251 for description.

Two connecting parts 610 are disposed at both ends of the first side panel 61, both ends of the second side panel 62 are respectively connected to corresponding connecting parts 610, and a side that is of the first side panel 61 and that faces away from the second side panel 62 is fastened to the first drive side 311 of the first carrier 231. The second side panel 62 penetrates the first coil 511, and the first drive magnet 521 is disposed on the side that is of the first side panel 61 and that faces the second side panel 62. Specifically, a side that is of the first drive side 311 and that faces away from the first driven side 312 is fastened to the first side panel 61.

In this embodiment, the first drive magnet 521 is disposed on the side that is of the first side panel 61 and that faces the second side panel 62, that is, the first drive magnet 521 is disposed on a side that is of the first side panel 61 and that faces away from the first drive side 311, and the first drive magnet 521 shields interference to the sensing magnet 32 and the magnetic member 29 by using the first side panel 61. In addition, a magnetic field of the first drive magnet 521 is distributed in a radial manner. A magnetic line of the first drive magnet 521 is constrained by using the first side panel 61 and the second side panel 62, so that the magnetic line of the first drive magnet 521 is constrained around the first drive magnet 521, so that a magnetic field intensity is more converged, and a magnetic field intensity of the first drive magnet 521 is enhanced.

In addition, the second side panel 62 passes through the center of the first coil 511, and introduces a magnetic field of the first drive magnet 521 into the first coil 511, to further enhance a magnetic field of the first coil 511, and increase a driving force of the first drive component. With a same driving force, the first drive magnet 521 in this embodiment may be smaller. This helps implement a long stroke (a micrometer-level to a centimeter-level stroke) and miniaturization of the optical lens 20, and save space of the electronic device 1000.

In this embodiment, the magnetic shielding member 60 may be made of a magnetic shielding material. The magnetic shielding material may be, for example, a magnetic conductive material like carbon steel, a metal injection molding material, nanocrystalline, or a soft magnetic material.

In this embodiment, a gap between the second side panel 62 and the first coil 511 is 0.15 mm, to avoid interference friction between the second side panel 62 and the first coil 511 caused by a component tolerance and an assembly tolerance.

Certainly, in another embodiment, the first drive magnet 521 may alternatively be embedded in the first drive side 311. To prevent magnetic interference to the sensing magnet 32 and the magnetic member 29 caused by the first drive magnet 521, the first drive magnet 521 may be wrapped by using a magnetic shielding material.

As shown in FIG. 24, a groove 611 is disposed on a surface that is of the first side panel 61 and that faces away from the first carrier 231, and the first drive magnet 521 is disposed in the groove 611. Specifically, when the first drive magnet 521 is disposed in the groove 611, the groove 611 is exposed only on a surface that is of the first drive magnet 521 and that faces the second side panel 62. That is, five surfaces of the first drive magnet 521 are all wrapped by the groove 611, and the other surface faces the second side panel 62. That is, the six surfaces of the first drive magnet 521 are wrapped by the magnetic shielding members 60. A magnetic field of the first drive magnet 521 is constrained inside the groove 611, and a magnetic field of the first coil 511 is enhanced. This effectively enhances a driving force of the first drive component 251, and implements large-stroke (7 mm) movement of the first lens 221 in limited space. In this embodiment, the first drive magnet 521 may be bonded to the groove 611 by using glue, or may be fastened to the groove 611 in another fastening manner like clamping.

Refer to FIG. 25. FIG. 25 is a schematic diagram of the first drive magnet 521 shown in FIG. 24.

As shown in FIG. 25, the first drive magnet 521 includes a first location A, a second location B, a third location C, and a fourth location D. When the first drive magnet 521 is or is not shielded by the magnetic shielding member 60, magnetic field intensities of the first drive magnet 521 at the first location A, the second location B, the third location C, and the fourth location D are simulated, and simulation results are shown in Table 2. It can be learned from Table 1 that when the magnetic shielding member 60 is used for shielding, a magnetic field intensity of the first drive magnet 521 is effectively improved. Compared with a magnetic field intensity obtained when the magnetic shielding member 60 is not disposed, the

magnetic field intensity increases by 60% to 219%.

**Table 1 Simulation results of magnetic field intensities at different locations of the first drive magnet**

| Location | | A | B | C | D |
|---|---|---|---|---|---|
| Magnetic field intensity /mT | Without magnetic shielding | 147.7484 | 148.1212 | 132.6302 | 108.5798 |
| | With magnetic shielding | 237.7051 | 237.507 | 408.4539 | 346.9456 |
| Magnetic field intensity enhancement rate | | 60.89% | 60.35% | 207.96% | 219.53% |

Certainly, in another embodiment, the first drive magnet 521 may alternatively be wrapped by the magnetic shielding member 60 on one to five surfaces.

Refer to Table 2. In this application, magnetic field intensities of whether the sensing magnet 32, the magnetic member 29, and the first drive magnet 521 are provided with a shielding structure are simulated.

**Table 2 Shielding simulation results of the sensing magnet, the magnetic member, and the first drive magnet**

| No. | Description | Magnetic field intensity of the sensing magnet /mT | Magnetic field change rate |
|---|---|---|---|
| Case 1 | Only the sensing magnet is not provided with a shielding structure | 202.0753 | 0 |
| Case 2 | Only the sensing magnet is provided with a shielding structure | 214.3469 | 6.07% |
| Case 3 | The sensing magnet, the magnetic member, and the first drive magnet are not provided with a shielding structure | 155.4666 | 23.07% |
| Case 4 | The sensing magnet, the magnetic member, and the first drive magnet are all provided with a shielding structure | 194.7346 | 3.63% |

It can be learned from Table 1 that, by adding the shielding member 50 to the sensing magnet 32, or by adding the shielding member 50 and the magnetic shielding member 60 to the magnetic member 29 and the first drive magnet 521, or by adding corresponding shielding structures to the sensing magnet 32, the magnetic member 29, and the first drive magnet 521, a magnetic field intensity change rate of the sensing magnet 32 can be reduced from 23.07% to 3.63%, and an improvement effect is obvious. This can effectively reduce magnetic interference caused by another magnet to the sensing magnet 32, improve sensing precision of the Hall effect sensor 33, and improve motion precision of the first carrier 231.

The foregoing descriptions are merely some embodiments and implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

**1.** An optical lens (20), wherein the optical lens (20) comprises a housing (21), a first lens (221), a first carrier (231), a slider (24), a magnetic member (29), a magnetic conductive strip (31), and a first drive component (251), the first carrier (231) is located on an inner side of the housing (21), the first lens (221) is mounted on the first carrier (231), and the first drive component (251) is configured to drive the first carrier (231) to move along an optical axis direction of the first lens (221);

the first carrier (231) is provided with a guide rail (314) extending along the optical axis direction of the first lens (221), the guide rail (314) comprises a first wall surface (3141) and a second wall surface (3142) between which an included angle is formed, the slider (24) penetrates the guide rail (314) and both ends are fastened to the housing (21), and the included angle between the first wall surface (3141) and the second wall surface (3142) is within a range from 40° to 170°; and
the magnetic conductive strip (31) is fastened to the housing (21), and the magnetic member (29) is fastened to

the first carrier (231), and is disposed opposite to the magnetic conductive strip (31), so that the first wall surface (3141) and the second wall surface (3142) are pressed against the slider (24), and the first carrier (231) can slide relative to the slider (24).

**2.** The optical lens (20) according to claim 1, wherein the included angle between the first wall surface (3141) and the second wall surface (3142) is within a range from 70° to 120°.

**3.** The optical lens (20) according to claim 1 or 2, wherein the optical lens (20) further comprises a sensing magnet (32) and a Hall effect sensor (33), the sensing magnet (32) is fastened to the first carrier (231) and is disposed adjacent to the magnetic member (29), and the Hall effect sensor (33) is disposed opposite to the sensing magnet (32).

**4.** The optical lens (20) according to claim 3, wherein the optical lens (20) further comprises a shielding member (50), and the shielding member (50) is configured to restrict a magnetic field direction of the sensing magnet (32), or the shielding member (50) is configured to restrict a magnetic field direction of the magnetic member (29).

**5.** The optical lens (20) according to claim 3, wherein the optical lens (20) further comprises a shielding member (50), the shielding member (50) comprises a first shielding member (51) and a second shielding member (52), the first shielding member (51) is configured to restrict a magnetic field direction of the sensing magnet (32), and the second shielding member (52) is configured to restrict a magnetic field direction of the magnetic member (29).

**6.** The optical lens (20) according to any one of claims 1 to 5, wherein a friction coefficient of the slider (24) is less than 0.15.

**7.** The optical lens (20) according to any one of claims 1 to 6, wherein the first drive component (251) comprises a first coil (511) and a first drive magnet (521), the first drive magnet (521) is fastened to the first carrier (231), and the first coil (511) and the first drive magnet (521) are disposed opposite to each other.

**8.** The optical lens (20) according to claim 7, wherein the first drive component (251) further comprises a magnetic shielding member (60), the magnetic shielding member (60) comprises a first side panel (61) and a second side panel (62) that are disposed opposite to each other, a side that is of the first side panel (61) and that is opposite to the second side panel (62) is fastened to the first carrier (231), the second side panel (62) penetrates the first coil (511), and the first drive magnet (521) is disposed on a side that is of the first side panel (61) and that faces the second side panel (62).

**9.** The optical lens (20) according to claim 8, wherein a groove (611) is disposed on a surface that is of the first side panel (61) and that is opposite to the first carrier (231), and the first drive magnet (521) is disposed in the groove (611).

**10.** The optical lens (20) according to any one of claims 1 to 9, wherein the first carrier (231) comprises a first drive side (311) and a first driven side (312) that are disposed opposite to each other, the slider (24) comprises a first slider (241) and a second slider (242), the first slider (241) penetrates the first drive side (311), the second slider (242) penetrates the first driven side (312), and a pole length of the first drive side (311) is greater than a pole length of the first driven side (312).

**11.** The optical lens (20) according to claim 10, wherein there are a plurality of magnetic members (29), some of the magnetic members (29) are disposed on the first drive side (311), and some of the magnetic members (29) are disposed on the first driven side (312); and there are two magnetic conductive strips (31), and the two magnetic conductive strips (31) are disposed at an interval on a bottom wall (212) of the housing (21), and are respectively disposed opposite to the first drive side (311) and the first driven side (312).

**12.** The optical lens (20) according to claim 11, wherein a quantity of magnetic members (29) disposed on the first drive side (311) is greater than a quantity of magnetic members (29) disposed on the first driven side (312).

**13.** The optical lens (20) according to any one of claims 10 to 12, wherein the optical lens (20) further comprises a second lens (222), a second carrier (232), and a second drive component (252), the second carrier (232) is located on an inner side of the housing (21), the second lens (222) is mounted on the second carrier (232), and the second drive component (252) is configured to drive the second carrier (232) to move along the optical axis direction; and
the second carrier (232) comprises a second drive side (321) and a second driven side (322), the first slider (241) penetrates the second driven side (322), the second slider (242) penetrates the second drive side (321), and a pole length of the second drive side (321) is greater than a pole length of the second driven side (322).

14. A camera module (1), wherein the camera module (1) comprises a module circuit board (40), a photosensitive chip (30), and the optical lens (20) according to any one of claims 1 to 13, the module circuit board (40) is located on an image side of the optical lens (20), the photosensitive chip (30) is fastened to a side that is of the module circuit board (40) and that faces the optical lens (20), and the photosensitive chip (30) is configured to collect light passing through the optical lens (20).

15. An electronic device (1000), wherein the electronic device (1000) comprises a housing (100) and the camera module (1) according to claim 14 , and the camera module (1) is mounted on the housing (100).

**Patentansprüche**

1. Optische Linse (20), wobei die optische Linse (20) ein Gehäuse (21), eine erste Linse (221), einen ersten Träger (231), einen Schieber (24), ein Magnetelement (29), einen magnetisch leitfähigen Streifen (31) und eine erste Antriebskomponente (251) umfasst, der erste Träger (231) sich an einer Innenseite des Gehäuses (21) befindet, die erste Linse (221) auf dem ersten Träger (231) montiert ist und die erste Antriebskomponente (251) konfiguriert ist, um den ersten Träger (231) anzutreiben, um sich entlang einer Richtung einer optischen Achse der ersten Linse (221) zu bewegen;

   der erste Träger (231) mit einer Führungsschiene (314) versehen ist, die sich entlang der Richtung der optischen Achse der ersten Linse (221) erstreckt, die Führungsschiene (314) eine erste Wandoberfläche (3141) und eine zweite Wandoberfläche (3142), zwischen denen ein eingeschlossener Winkel ausgebildet ist, umfasst, der Schieber (24) die Führungsschiene (314) durchdringt und beide Enden an dem Gehäuse (21) befestigt sind und der eingeschlossene Winkel zwischen der ersten Wandoberfläche (3141) und der zweiten Wandoberfläche (3142) innerhalb eines Bereichs von 40° bis 170° liegt; und
   der magnetisch leitfähige Streifen (31) an dem Gehäuse (21) befestigt ist und das Magnetelement (29) an dem ersten Träger (231) befestigt ist und gegenüberliegend dem magnetisch leitfähigen Streifen (31) so angeordnet ist, dass die erste Wandoberfläche (3141) und die zweite Wandoberfläche (3142) gegen den Schieber (24) gedrückt werden und der erste Träger (231) relativ zu dem Schieber (24) verschoben werden kann.

2. Optische Linse (20) nach Anspruch 1, wobei der eingeschlossene Winkel zwischen der ersten Wandoberfläche (3141) und der zweiten Wandoberfläche (3142) innerhalb eines Bereichs von 70° bis 120° liegt.

3. Optische Linse (20) nach Anspruch 1 oder 2, wobei die optische Linse (20) ferner einen Sensormagneten (32) und einen Hall-Effekt-Sensor (33) umfasst, der Sensormagnet (32) an dem ersten Träger (231) befestigt ist und angrenzend an dem Magnetelement (29) angeordnet ist und der Hall-Effekt-Sensor (33) gegenüberliegend dem Sensormagneten (32) angeordnet ist.

4. Optische Linse (20) nach Anspruch 3, wobei die optische Linse (20) ferner ein Abschirmelement (50) umfasst und das Abschirmelement (50) konfiguriert ist, um eine Magnetfeldrichtung des Erfassungsmagneten (32) einzuschränken, oder das Abschirmelement (50) konfiguriert ist, um eine Magnetfeldrichtung des Magnetelements (29) einzuschränken.

5. Optische Linse (20) nach Anspruch 3, wobei die optische Linse (20) ferner ein Abschirmelement (50) umfasst, das Abschirmelement (50) ein erstes Abschirmelement (51) und ein zweites Abschirmelement (52) umfasst, das erste Abschirmelement (51) konfiguriert ist, um eine Magnetfeldrichtung des Erfassungsmagneten (32) einzuschränken, und das zweite Abschirmelement (52) konfiguriert ist, um eine Magnetfeldrichtung des Magnetelements (29) einzuschränken.

6. Optische Linse (20) nach einem der Ansprüche 1 bis 5, wobei ein Reibungskoeffizient des Schiebers (24) kleiner als 0,15 ist.

7. Optische Linse (20) nach einem der Ansprüche 1 bis 6, wobei die erste Antriebskomponente (251) eine erste Spule (511) und einen ersten Antriebsmagneten (521) umfasst, der erste Antriebsmagnet (521) an dem ersten Träger (231) befestigt ist und die erste Spule (511) und der erste Antriebsmagnet (521) einander gegenüberliegend angeordnet sind.

8. Optische Linse (20) nach Anspruch 7, wobei die erste Antriebskomponente (251) ferner ein magnetisches Ab-

schirmelement (60) umfasst, das magnetische Abschirmelement (60) eine erste Seitenplatte (61) und eine zweite Seitenplatte (62), die einander gegenüberliegend angeordnet sind, umfasst, eine Seite, die zu der ersten Seitenplatte (61) gehört und die der zweiten Seitenplatte (62) gegenüberliegt, an dem ersten Träger (231) befestigt ist, die zweite Seitenplatte (62) die erste Spule (511) durchdringt und der erste Antriebsmagnet (521) auf einer Seite, die zu der ersten Seitenplatte (61) gehört und die der zweiten Seitenplatte (62) zugewandt ist, angeordnet ist.

**9.** Optische Linse (20) nach Anspruch 8, wobei eine Nut (611) auf einer Oberfläche, die zu der ersten Seitenplatte (61) gehört und die dem ersten Träger (231) gegenüberliegt, angeordnet ist und der erste Antriebsmagnet (521) in der Nut (611) angeordnet ist.

**10.** Optische Linse (20) nach einem der Ansprüche 1 bis 9, wobei der erste Träger (231) eine erste Antriebsseite (311) und eine erste angetriebene Seite (312), die einander gegenüberliegend angeordnet sind, umfasst, der Schieber (24) einen ersten Schieber (241) und einen zweiten Schieber (242) umfasst, der erste Schieber (241) die erste Antriebsseite (311) durchdringt, der zweite Schieber (242) die erste angetriebene Seite (312) durchdringt und eine Pollänge der ersten Antriebsseite (311) größer als eine Pollänge der ersten angetriebenen Seite (312) ist.

**11.** Optische Linse (20) nach Anspruch 10, wobei eine Vielzahl von Magnetelementen (29) vorhanden ist, einige der Magnetelemente (29) auf der ersten Antriebsseite (311) angeordnet sind und einige der Magnetelemente (29) auf der ersten angetriebenen Seite (312) angeordnet sind; und zwei magnetisch leitfähige Streifen (31) vorhanden sind und die zwei magnetisch leitfähigen Streifen (31) in einem Abstand auf einer Bodenwand (212) des Gehäuses (21) angeordnet sind und jeweils gegenüberliegend der ersten Antriebsseite (311) und der ersten angetriebenen Seite (312) angeordnet sind.

**12.** Optische Linse (20) nach Anspruch 11, wobei eine Anzahl von Magnetelementen (29), die auf der ersten Antriebsseite (311) angeordnet sind, größer als eine Anzahl von Magnetelementen (29), die auf der ersten angetriebenen Seite (312) angeordnet sind, ist.

**13.** Optische Linse (20) nach einem der Ansprüche 10 bis 12, wobei die optische Linse (20) ferner eine zweite Linse (222), einen zweiten Träger (232) und eine zweite Antriebskomponente (252) umfasst, der zweite Träger (232) sich an einer Innenseite des Gehäuses (21) befindet, die zweite Linse (222) auf dem zweiten Träger (232) montiert ist und die zweite Antriebskomponente (252) konfiguriert ist, um den zweiten Träger (232) anzutreiben, um sich entlang der Richtung der optischen Achse zu bewegen; und der zweite Träger (232) eine zweite Antriebsseite (321) und eine zweite angetriebene Seite (322) umfasst, der erste Schieber (241) die zweite angetriebene Seite (322) durchdringt, der zweite Schieber (242) die zweite Antriebsseite (321) durchdringt und eine Pollänge der zweiten Antriebsseite (321) größer als eine Pollänge der zweiten angetriebenen Seite (322) ist.

**14.** Kameramodul (1), wobei das Kameramodul (1) eine Modulleiterplatte (40), einen lichtempfindlichen Chip (30) und die optische Linse (20) nach einem der Ansprüche 1 bis 13 umfasst, die Modulleiterplatte (40) sich auf einer Bildseite der optischen Linse (20) befindet, der lichtempfindliche Chip (30) an einer Seite, die zu der Modulleiterplatte (40) gehört und die der optischen Linse (20) zugewandt ist, befestigt ist und der lichtempfindliche Chip (30) konfiguriert ist, um Licht, das durch die optische Linse (20) hindurchgeht, zu sammeln.

**15.** Elektronische Vorrichtung (1000), wobei die elektronische Vorrichtung (1000) ein Gehäuse (100) und das Kameramodul (1) nach Anspruch 14 umfasst und das Kameramodul (1) auf dem Gehäuse (100) montiert ist.

## Revendications

**1.** Lentille optique (20), dans laquelle la lentille optique (20) comprend un boîtier (21), une première lentille (221), un premier support (231), un curseur (24), un élément magnétique (29), une bande conductrice magnétique (31) et un premier composant d'entraînement (251), le premier support (231) est situé sur un côté intérieur du boîtier (21), la première lentille (221) est montée sur le premier support (231), et le premier composant d'entraînement (251) est configuré pour entraîner le premier support (231) à se déplacer le long d'une direction de l'axe optique de la première lentille (221) ;

le premier support (231) est pourvu d'un rail de guidage (314) s'étendant le long de la direction de l'axe optique de la première lentille (221), le rail de guidage (314) comprend une première surface de paroi (3141) et une seconde surface de paroi (3142) entre lesquelles un angle inclus est formé, le curseur (24) pénètre dans le rail de guidage

(314) et les deux extrémités sont fixées au boîtier (21), et l'angle inclus entre la première surface de paroi (3141) et la seconde surface de paroi (3142) est compris dans une plage allant de 40° à 170° ; et
la bande conductrice magnétique (31) est fixée au boîtier (21), et l'élément magnétique (29) est fixé au premier support (231), et est disposé à l'opposé de la bande conductrice magnétique (31), de sorte que la première surface de paroi (3141) et la seconde surface de paroi (3142) sont pressées contre le curseur (24), et que le premier support (231) peut coulisser par rapport au curseur (24).

**2.** Lentille optique (20) selon la revendication 1, dans laquelle l'angle inclus entre la première surface de paroi (3141) et la seconde surface de paroi (3142) est compris entre 70° et 120°.

**3.** Lentille optique (20) selon la revendication 1 ou 2, dans laquelle la lentille optique (20) comprend en outre un aimant de détection (32) et un capteur à effet Hall (33), l'aimant de détection (32) est fixé au premier support (231) et est disposé à côté de l'élément magnétique (29), et le capteur à effet Hall (33) est disposé à l'opposé de l'aimant de détection (32).

**4.** Lentille optique (20) selon la revendication 3, dans laquelle la lentille optique (20) comprend en outre un élément de blindage (50), et l'élément de blindage (50) est configuré pour restreindre une direction de champ magnétique de l'aimant de détection (32), ou l'élément de blindage (50) est configuré pour restreindre une direction de champ magnétique de l'élément magnétique (29).

**5.** Lentille optique (20) selon la revendication 3, dans laquelle la lentille optique (20) comprend en outre un élément de blindage (50), l'élément de blindage (50) comprend un premier élément de blindage (51) et un second élément de blindage (52), le premier élément de blindage (51) est configuré pour restreindre une direction de champ magnétique de l'aimant de détection (32), et le second élément de blindage (52) est configuré pour restreindre une direction de champ magnétique de l'élément magnétique (29).

**6.** Lentille optique (20) selon l'une quelconque des revendications 1 à 5, dans laquelle le coefficient de frottement du curseur (24) est inférieur à 0,15.

**7.** Lentille optique (20) selon l'une quelconque des revendications 1 à 6, dans laquelle le premier composant d'entraînement (251) comprend une première bobine (511) et un premier aimant d'entraînement (521), le premier aimant d'entraînement (521) est fixé au premier support (231), et la première bobine (511) et le premier aimant d'entraînement (521) sont disposés à l'opposé l'un de l'autre.

**8.** Lentille optique (20) selon la revendication 7, dans laquelle le premier composant d'entraînement (251) comprend en outre un élément de blindage magnétique (60), l'élément de blindage magnétique (60) comprend un premier panneau latéral (61) et un second panneau latéral (62) qui sont disposés à l'opposé l'un de l'autre, un côté du premier panneau latéral (61) opposé au second panneau latéral (62) est fixé au premier support (231), le second panneau latéral (62) pénètre dans la première bobine (511) et le premier aimant d'entraînement (521) est disposé sur un côté du premier panneau latéral (61) qui fait face au second panneau latéral (62).

**9.** Lentille optique (20) selon la revendication 8, dans laquelle une rainure (611) est disposée sur une surface du premier panneau latéral (61) opposée au premier support (231), et le premier aimant d'entraînement (521) est disposé dans la rainure (611).

**10.** Lentille optique (20) selon l'une quelconque des revendications 1 à 9, dans laquelle le premier support (231) comprend un premier côté d'entraînement (311) et un premier côté entraîné s(312) qui sont disposés à l'opposé l'un de l'autre, le curseur (24) comprend un premier curseur (241) et un second curseur (242), le premier curseur (241) pénètre dans le premier côté d'entraînement (311), le second curseur (242) pénètre dans le premier côté entraîné (312), et une longueur de pôle du premier côté d'entraînement (311) est supérieure à une longueur de pôle du premier côté entraîné (312).

**11.** Lentille optique (20) selon la revendication 10, dans laquelle il y a une pluralité d'éléments magnétiques (29), certains des éléments magnétiques (29) sont disposés sur le premier côté d'entraînement (311), et certains des éléments magnétiques (29) sont disposés sur le premier côté entraîné (312) ; et il y a deux bandes conductrices magnétiques (31), et les deux bandes conductrices magnétiques (31) sont disposées à un intervalle sur une paroi inférieure (212) du boîtier (21), et sont respectivement disposées à l'opposé du premier côté d'entraînement (311) et du premier côté entraîné (312).

**12.** Lentille optique (20) selon la revendication 11, dans laquelle une quantité d'éléments magnétiques (29) disposés sur le premier côté d'entraînement (311) est supérieure à une quantité d'éléments magnétiques (29) disposés sur le premier côté entraîné (312).

**13.** Lentille optique (20) selon l'une quelconque des revendications 10 à 12, dans laquelle la lentille optique (20) comprend en outre une seconde lentille (222), un second support (232) et un second composant d'entraînement (252), le second support (232) est situé sur un côté intérieur du boîtier (21), la seconde lentille (222) est montée sur le second support (232) et le second composant d'entraînement (252) est configuré pour entraîner le second support (232) à se déplacer le long de la direction de l'axe optique ; et le second support (232) comprend un second côté d'entraînement (321) et un second côté entraîné (322), le premier curseur (241) pénètre dans le second côté entraîné (322), le second curseur (242) pénètre dans le second côté d'entraînement (321), et une longueur de pôle du second côté d'entraînement (321) est supérieure à une longueur de pôle du second côté entraîné (322).

**14.** Module de caméra (1), dans lequel le module de caméra (1) comprend une carte de circuit imprimé de module (40), une puce photosensible (30) et la lentille optique (20) selon l'une quelconque des revendications 1 à 13, la carte de circuit imprimé de module (40) est située sur un côté image de la lentille optique (20), la puce photosensible (30) est fixée sur un côté de la carte de circuit imprimé de module (40) qui fait face à la lentille optique (20), et la puce photosensible (30) est configurée pour collecter la lumière qui passe à travers la lentille optique (20).

**15.** Dispositif électronique (1000), dans lequel le dispositif électronique (1000) comprend un boîtier (100) et le module de caméra (1) selon la revendication 14, et le module de caméra (1) est monté sur le boîtier (100).

1000
300
2001
600
700
200
500
100
1001
1002
800
Y
X
Z

FIG. 1

1000
1003
4001
A
A
4001
400
1003
4002
1004
100
1001
1002
Y
X
Z

FIG. 2

40
200
30
1002
1
20
10
30
40
13
10
1003
11
12
X
Z

FIG. 3

20
X
Y
Z
21

FIG. 4

21B
21A
21
241
211
242
241
24
252
251
25
22
222
221
21A
221
C
B
C
B
23
231
232
251
210

FIG. 5

211
2133
2132
A
A
212
2134
2133
2132
2133
213
A
210
A
2131

FIG. 6

241
242
28
2133
A
211
A
A
210
A
27
2131
Y
X
Z

FIG. 7

251
222
322
324
311
323
321
232
314
312
241
313
231
252
242
221

FIG. 8

29
32
29
29
312
29
29
32
241
29
231
311
242

FIG. 9

2132
511
521
314
31
29
313
221
31
231
212
522
21A
512
2134

FIG. 10

610
62
61
511
D
610
311
314
312
314
D

FIG. 11

3141
3142
241
θ
231
314
21
29
31

FIG. 12

3141
3142
241

FIG. 13

3142
241
3141

FIG. 14

N2
N1
θ
3141
3142
241
G+F

FIG. 15

N1
3142
241
θ
F
G
3141
N2

FIG. 16

N1
Rotate by an angle α
N2
θ
α
3142
3141
G
241
F

FIG. 17

Curve of a support force N1/N2 changing with α
7
6
5
4
3
2
1
0
0
50
100
150
200
250
300
350
400
N1
N2

FIG. 18

Curve of a support force N1/N2 changing with θ
40
30
20
10
0
−10
−20
−30
0
20
40
60
80
100
120
140
160
180
200
N1
N2

FIG. 19

251
32
33
314
311
231

FIG. 20

52
51
50
327
328
293
52
326
294
292
32
325
29
291

FIG. 21

A shielding member is disposed on a single surface of a sensing magnet

T
1.4
1.2
1
0.8
0.6
0.4
0.2

FIG. 22

A shielding member is disposed on three surfaces of a sensing magnet

T
2.5
2
1.5
1
0.5

FIG. 23

61
60
61
62
511
251
311
231
521
611
32
312

FIG. 24

A
B
C
D

FIG. 25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 111929802 B